# EUROPEAN PATENT SPECIFICATION

(11) **EP 3 409 075 B1**
(45) Date of publication and mention of the grant of the patent: **09.12.2020**
(21) Application number: 16887521.9
(22) Date of filing: 18.07.2016
(51) Int. Cl.: H04W 36/00, H04W 8/18, H04W 8/24, H04W 56/00, H04W 88/06, H04B 7/06

(54) **ELS/MAC CE EXTENSION AND APPLICATION FOR CRAT UE**
ELS/MAC-CE-ERWEITERUNG UND -ANWENDUNG FÜR CRAT-BENUTZERGERÄT
EXTENSION DE CE ELS/MAC ET APPLICATION POUR UE CRAT

(30) Priority: 29.01.2016 WO PCT/CN2016/072737
(43) Date of publication of application: 05.12.2018
(60) Divisional application: 20179045.8
(73) Proprietor: QUALCOMM Incorporated, San Diego, CA 92121-1714 (US)
(72) Inventor: GUO, Jiming, San Diego, CA 92121-1714 (US); XIE, Ling, San Diego, CA 92121-1714 (US); WU, Peng, San Diego, CA 92121-1714 (US); DENG, Jun, San Diego, CA 92121-1714 (US); LIN, Daowei, San Diego, CA 92121-1714 (US); SHAHIDI, Reza, San Diego, CA 92121-1714 (US); GHOLMIEH, Aziz, San Diego, CA 92121-1714 (US); ZACHARIAS, Leena, San Diego, CA 92121-1714 (US); MAHESHWARI, Shailesh, San Diego, CA 92121-1714 (US); SHAH, Chintan Shirish, San Diego, CA 92121-1714 (US); KAIVARAM, Pavan, San Diego, CA 92121-1714 (US); BALASUBRANIAN, Srinivasan, San Diego, CA 92121-1714 (US)
(74) Representative: Dunlop, Hugh Christopher
(86) International application number: PCT/CN2016/090308
(87) International publication number: WO 2017/128642

(56) References cited:
- WO-A1-2015/180779
- CN-A- 103 167 475
- CN-A- 103 281 749
- US-A1- 2012 190 362
- US-A1- 2013 250 854
- US-A1- 2013 267 267
- US-A1- 2015 289 314
- US-A1- 2015 312 787

## Description

### BACKGROUND

A wireless communication device, such as a mobile phone device or a smart phone, may include two or more Subscriber Identity Modules (SIMs). Each SIM may enable at least one subscription via a Radio Access Technology (RAT). Such a wireless communication device may be a multi-SIM wireless communication device. In a Multi-SIM-Multi-Active (MSMA) wireless communication device, all SIMs may be active at the same time. In a Multi-SIM-Multi-Standby (MSMS) wireless communication device, if any one SIM is active, then the rest of the SIM(s) may be in a standby mode. The RATs may include, but are not limited to, Frequency Division Multiple Access (FDMA), Time Division Multiple Access (TDMA), Code Division Multiple Access (CDMA) (particularly, Evolution-Data Optimized (EVDO)), Universal Mobile Telecommunications Systems (UMTS) (particularly, Wideband Code Division Multiple Access (WCDMA), Long Term Evolution (LTE), High-Speed Downlink Packet Access (HSDPA), and the like), Global System for Mobile Communications (GSM), Code Division Multiple Access 1x Radio Transmission Technology (1x), General Packet Radio Service (GPRS), Wi-Fi, Personal Communications Service (PCS), and other protocols that may be used in a wireless communications network or a data communications network.

US 2015/312787 is directed at the dynamic update of user equipment (UE) capability for a given radio access technology (RAT), e.g. capability for inter-frequency and inter-RAT measurements.

US 2012/190362 discloses systems and methods of mobile device-controlled negotiation of a tuneaway schedule with a wireless communication network.

### SUMMARY

The invention is defined in the independent claims. Embodiments of the invention are defined in the dependent claims.

Examples described herein relate to a control element extension for concurrent radio access technologies (CRAT). A control element can be one or more data packets or another form of electronic message communicated between a wireless communication device and a network base station. The control element can include information relating to network events, capabilities, or parameters. For example, in some examples the control element can include information relating to an extended signaling capability of the wireless communication device, a periodic or aperiodic tune-away of a subscriber identity module (SIM) associated with the wireless communication device, a network parameter reset, a state mismatch, or a timing synchronization. The information included in the control element can be received by the network base station, and can be used to improve network performance.

In some examples, a method for a wireless communication device can include sending, by a wireless communication device to a network base station, a message related to one or more of an extended signaling capability, periodic tune-away, network parameter reset, state mismatch, or timing synchronization. The method also can include receiving, by the wireless communication device from the network base station, a network response in response to the message.

In some implementations, the message sent to the network base station is a first message including an indication of an extended signaling capability. The network response can include a second message including an inquiry regarding the extended signaling capability. The method also can include sending, to the network base station responsive to receiving the second message, a third message including extended capability information.

In some implementations, the message sent to the network base station is a first message including an indication of an extended capability of the second SIM configured to communicate according to the second RAT. The method also can include determining, by the wireless communication device prior to sending the first message, that the first SIM configured to communicate according to the first RAT has been deactivated. In some implementations, the method can include receiving, from the network base station, a second message including an inquiry regarding the extended capability of the second SIM. In some implementations, the method can include sending, to the network base station responsive to receiving the second message, a third message including extended capability information of the second SIM. In some implementations, the method can include receiving, from the network base station, a fourth message indicating a connection reconfiguration and sending, to the network base station responsive to receiving the fourth message, a fifth message indicating that the connection reconfiguration is complete.

In some implementations, the message sent to the network base station can be a control element indicating a periodic tune away of the first SIM, the control element including a first value tag. The method also can include determining, by the wireless communication device, whether a feedback control element has been received from the network base station and resending, to the network base station, the control element indicating the periodic tune away of the first SIM, responsive to determining that the feedback control element has not been received from the network base station.

In some implementations, determining whether the feedback control element has been received from the network base station can include receiving a feedback control element including a second value tag and determining match between a the first value tag of the control element and the second value tag of the feedback control element.

In some implementations, the message sent to the network base station is an aperiodic CSI report and the message received from the network base station is a first network parameter adjustment message including a first adjusted value for a first network parameter. The method also can include determining, by the wireless communication device prior to sending the aperiodic CSI report, that a network parameter control loop reset is needed and receiving, from the network base station, a second network parameter adjustment message including a second adjusted value for a second network parameter.

In some implementations, the method can include sending, to the network base station, a control element for an aperiodic CSI report and receiving, from the network base station, a CSI request. In some implementations, the aperiodic CSI report is sent responsive to determining that downlink carrier bits match a predetermined value. In some implementations, the network parameter control loop is associated with at least one of a rank indication (RI), a channel quality indication (CQI), and a modulation and coding scheme (MCS).

In some implementations, the message sent to the network base station is a control element for cell state synchronization and the message received from the network base station is n activation/deactivation control element. The method also can include detecting, by the wireless communication device prior to sending the control element for cell state synchronization , a cell state mismatch and activating or deactivating, by the wireless communication device, at least one cell according to information included in the activation/deactivation control element received from the network base station.

In some implementations, the message sent to the network base station is a control element for uplink timing synchronization and the message received from the network base station is a message including a tune away command including a tune away value. The method also can include detecting, by the wireless communication device prior to sending the control element for uplink timing synchronization, an uplink timing abnormality and adjusting, by the wireless communication device, a timing advance according to the tune away value included in the tune away command received from the network base station. In some implementations, the method can include receiving, from the network base station, a channel order. In some implementations, the method can include initiating, by the wireless communication device, a RACH.

In some examples, a wireless communication device can include at least one radio frequency (RF) resource, a processor configured to connect to a first Subscriber Identity Module (SIM) associated with a first subscription and to a second SIM associated with a second subscription, and configured with processor-executable instructions to. The processor-executable instructions can cause the processor to send, to a network base station, a message related to one or more of an extended signaling capability, periodic tune-away, network parameter reset, state mismatch, or timing synchronization and receive, from the network base station, a network response in response to the message.

In some examples, the message sent to the network base station includes an indication of an extended signaling capability, and the message received from the network base station is a second message including an inquiry regarding the extended signaling capability, the processor further configured with processor-executable instructions to send, to the network base station responsive to receiving the second message, a third message including extended capability information.

In some examples, the message sent to the network base station is a first message including an indication of an extended capability of the second SIM. The processor can be further configured with processor-executable instructions to determine, prior to sending the first message, that the first SIM has been deactivated.

In some examples, the wireless communication device is further configured to receive, from the network base station, a second message including an inquiry regarding the extended capability of the second SIM. In some examples, the wireless communication device is further configured to send, to the network base station responsive to receiving the second message, a third message including extended capability information of the second SIM. In some examples, the wireless communication device is further configured to receive, from the network base station, a fourth message indicating a connection reconfiguration and send, to the network base station responsive to receiving the fourth message, a fifth message indicating that the connection reconfiguration is complete.

In some examples, the message sent to the network base station is a control element indicating a periodic tune away of the first SIM, the control element including a first value tag. The processor can be further configured with processor-executable instructions to determine whether a feedback control element has been received from the network base station and resend, to the network base station, the control element indicating the period tune away of the first SIM, responsive to determining that the feedback control element has not been received from the network base station.

In some examples, the wireless communication device is further configured to determine whether the feedback control element has been received from the network base station by receiving a feedback control element including a second value tag and determining match between a the first value tag of the control element and the second value tag of the feedback control element.

In some examples, the message sent to the network base station is an aperiodic CSI report and the message received from the network base station is a first network parameter adjustment message including a first adjusted value for a first network parameter. The processor can be further configured with processor-executable instructions to determine, prior to sending the aperiodic CSI report, that a network parameter control loop reset is needed and receive, from the network base station, a second network parameter adjustment message including a second adjusted value for a second network parameter.

In some examples, the wireless communication device is further configured to send, to the network base station, a control element for an aperiodic CSI report and receive, from the network base station, a CSI request. In some examples, the aperiodic CSI report is sent responsive to determining that downlink carrier bits match a predetermined value. In some examples, the network parameter control loop is associated with at least one of a rank indication (RI), a channel quality indication (CQI), and a modulation and coding scheme (MCS).

In some examples, the message sent to the network base station is a control element for cell state synchronization and the message received from the network base station is an activation/deactivation control element. The processor can be further configured with processor-executable instructions to detect, by the wireless communication device prior to sending the control element for cell state synchronization, a cell state mismatch and activate or deactivating at least one cell according to information included in the activation/deactivation control element received from the network base station.

In some examples, the message sent to the network base station is a control element for uplink timing synchronization and the message received from the network base station includes a tune away command including a tune away value. The processor can be further configured with processor-executable instructions to detect, prior to sending the control element for uplink timing synchronization, an uplink timing abnormality and adjust a timing advance according to the tune away value included in the tune away command received from the network base station. In some examples, the wireless communication device is further configured to receive, from the network base station, a channel order. In some examples, the wireless communication device is further configured to initiate a RACH.

In some examples, a computer readable medium can have instructions encoded thereon which, when executed by one or more processors, cause the one or more processors to perform a method for a wireless communication device having a first Subscriber Identity Module (SIM) configured to communicate according to a first radio access technology (RAT) and a second SIM configured to communicate according to a second RAT to manage communications over the first SIM and the second SIM. The method can include sending, by the wireless communication device to a network base station, a message related to one or more of an extended signaling capability, periodic tune-away, network parameter reset, state mismatch, or timing synchronization, and receiving, by the wireless communication device from the network base station, a network response in response to the message.

In some examples, the message sent to the network base station is a first message including an indication of an extended signaling capability and the network response includes a second message including an inquiry regarding the extended signaling capability. The method also can include sending, to the network base station responsive to receiving the second message, a third message including extended capability information.

In some examples, the message sent to the network base station is a first message including an indication of an extended capability of the second SIM configured to communicate according to the second RAT. The method also can include determining, by the wireless communication device prior to sending the first message, that the first SIM configured to communicate according to the first RAT has been deactivated. In some examples, the method also can include receiving, from the network base station, a second message including an inquiry regarding the extended capability of the second SIM. In some examples, the method also can include sending, to the network base station responsive to receiving the second message, a third message including extended capability information of the second SIM. In some examples, the method also can include receiving, from the network base station, a fourth message indicating a connection reconfiguration and sending, to the network base station responsive to receiving the fourth message, a fifth message indicating that the connection reconfiguration is complete.

In some examples, the message sent to the network base station is a control element indicating a periodic tune away of the first SIM, the control element including a first value tag. The method also can include determining, by the wireless communication device, whether a feedback control element has been received from the network base station and resending, to the network base station, the control element indicating the periodic tune away of the first SIM, responsive to determining that the feedback control element has not been received from the network base station.

In some examples, determining whether the feedback control element has been received from the network base station can include receiving a feedback control element including a second value tag and determining match between a the first value tag of the control element and the second value tag of the feedback control element.

In some examples, the message sent to the network base station is an aperiodic CSI report and the message received from the network base station is a first network parameter adjustment message including a first adjusted value for a first network parameter. The method also can include determining, by the wireless communication device prior to sending the aperiodic CSI report, that a network parameter control loop reset is needed and receiving, from the network base station, a second network parameter adjustment message including a second adjusted value for a second network parameter. In some examples, the method also can include sending, to the network base station, a control element for an aperiodic CSI report and receiving, from the network base station, a CSI request. In some examples, the aperiodic CSI report is sent responsive to determining that downlink carrier bits match a predetermined value. In some examples, the network parameter control loop is associated with at least one of a rank indication (RI), a channel quality indication (CQI), and a modulation and coding scheme (MCS).

In some examples, the message sent to the network base station is a control element for cell state synchronization and the message received from the network base station is n activation/deactivation control element. The method also can include detecting, by the wireless communication device prior to sending the control element for cell state synchronization , a cell state mismatch and activating or deactivating, by the wireless communication device, at least one cell according to information included in the activation/deactivation control element received from the network base station.

In some examples, the message sent to the network base station is a control element for uplink timing synchronization and the message received from the network base station is a message including a tune away command including a tune away value. The method also can include detecting, by the wireless communication device prior to sending the control element for uplink timing synchronization, an uplink timing abnormality and adjusting, by the wireless communication device, a timing advance according to the tune away value included in the tune away command received from the network base station. In some examples, the method also can include receiving, from the network base station, a channel order. In some examples, the method also can include initiating, by the wireless communication device, a RACH.

In some examples, a wireless communication device includes at least one RF resource, a processor configured to connect to a first SIM associated with a first subscription and to a second SIM associated with a second subscription, and configured to send, to a network base station associated to the first SIM, a pre-scheduling request requesting the network base station to schedule uplink grant before a periodic tune-away to the second SIM, and receive, from the network base station, a network response in response to the pre-scheduling request, and a memory.

In some examples, a method for a wireless communication device having a first SIM configured to communicate according to a first RAT and a second SIM configured to communicate according to a second RAT to manage communications over the first SIM and the second SIM, the method includes sending, to a network base station associated to the first SIM, a pre-scheduling request requesting the network base station to schedule uplink grant before a periodic tune-away to the second SIM, and receiving, from the network base station, a network response in response to the pre-scheduling request

According to various examples, a network base station includes at least one antenna group, a processor coupled to the antenna group, the processor configured to receive, from a wireless communication device in communication with the network base station, a pre-scheduling request requesting the network base station to schedule uplink grant before a periodic tune-away, determine network response to the pre-scheduling request, and send, to the wireless communication device, the network response.

In some examples, a wireless communication device includes at least one RF resource, a processor configured to connect to a first SIM associated with a first subscription and to a second SIM associated with a second subscription, and configured to send, to a network base station associated to the first SIM, a connection suspension request including a suspension timer;, and tune the RF resource away to the second SIM, and a memory.

According to various examples, a network base station includes at least one antenna group, a processor coupled to the antenna group, the processor configured to receive, from a wireless communication device in communication with the network base station, a connection suspension request including a suspension timer, and maintain one or more of a Radio Resource Control (RRC) context or Multi-SIM-Multi-Standby (MSMS) context during the suspension timer.

In some examples, a wireless communication device includes at least one RF resource, a processor configured to connect to a first SIM associated with a first subscription and to a second SIM associated with a second subscription, and configured to determine an incoming tune-away from the first SIM to the second SIM, send, to a network base station associated with the first SIM, a connection release message, and tune the RF resource away to the second SIM, a memory.

In some examples, a wireless communication device includes at least one RF resource, a processor configured to connect to a first SIM associated with a first subscription and to a second SIM associated with a second subscription, and configured to receive, from a wireless communication device in communication with the network base station, a connection release message, and remove one or more of a RRC context or MSMS context in response to receiving the connection release message.

In some examples, a wireless communication device includes at least one RF resource, a processor configured to connect to a first SIM associated with a first subscription and to a second SIM associated with a second subscription, and configured to determine that a network parameter control loop reset is needed, and send, to a network base station associated with the first SIM, a link efficiency recovery message, a memory.

In some examples, a wireless communication device includes at least one RF resource, a processor configured to connect to a first SIM associated with a first subscription and to a second SIM associated with a second subscription, and configured to receive, from a wireless communication device in communication with the network base station, a link efficiency recovery message, and reset a network parameter control loop based on the link efficiency recovery message.

### BRIEF DESCRIPTION OF THE DRAWINGS

The accompanying drawings, which are incorporated herein and constitute part of this specification, illustrate exemplary examples of the disclosure, and together with the general description given above and the detailed description given below, serve to explain the features of the various examples.
FIG. 1 is a schematic diagram of a communication system in accordance with various examples.
FIG. 2 is a component block diagram of an example of a wireless communication device according to various examples.
FIG. 3 is a process flow diagram illustrating an example of a method for communicating an extended capability according to various examples.
FIG. 4 is a process flow diagram illustrating an example of a method for communicating an extended capability of a second radio access technology (RAT) according to various examples.
FIG. 5 is a block diagram of a control element associated with a tune away event according to various examples.
FIG. 6A is a block diagram of a control element associated with a periodic tune away indication according to various examples.
FIG. 6B is a process flow diagram illustrating an example of a method for indicating a periodic tune away according to various examples.
FIG. 7 is a block diagram of a control element associated with a tune back indication according to various examples.
FIG. 8A is a block diagram of a control element associated with a network parameter reset according to various examples.
FIG. 8B is a process flow diagram illustrating an example of a method for initiating a network parameter reset according to various examples.
FIG. 9A is a block diagram of a control element associated with cell state synchronization to various examples.
FIG. 9B is a process flow diagram illustrating an example of a method for initiating cell state synchronization according to various examples.
FIG. 10A is a block diagram of a control element associated with uplink timing synchronization to various examples.
FIG. 10B is a process flow diagram illustrating an example of a method for initiating uplink timing synchronization according to various examples.
FIG. 11 is a schematic diagram of an example of a wireless communication device according to various examples
FIG. 12 is a process flow diagram illustrating an example of a method for pre-scheduling uplink grants according to various examples.
FIG. 13 is a process flow diagram illustrating an example of a method for pre-scheduling uplink grants according to various examples.
FIG. 14 is a process flow diagram illustrating an example of a method for pre-scheduling release method according to various examples.
FIG. 15A is a block diagram illustrating an example of a control element associated with a pre-scheduling request according to various examples.
FIG. 15B is a block diagram illustrating an example of a control element associated with a pre-scheduling release request according to various examples.
FIG. 16 is a process flow diagram illustrating an example of a method for suspending a context associated with a wireless communication device according to various examples.
FIG. 17 is a process flow diagram illustrating an example of a method for suspending a context associated with a wireless communication device according to various examples.
FIG. 18 is a process flow diagram illustrating an example of a method for connection release with mobility management entity (MME) radio bearer suspension according to various examples.
FIG. 19 is a process flow diagram illustrating an example of a method for connection release according to various examples.
FIG. 20 is a process flow diagram illustrating an example of a method for tune-away-triggered connection release according to various examples.
FIG. 21 is a process flow diagram illustrating an example of a method for uplink/downlink efficiency recovery according to various examples.
FIG. 22 is a block diagram of an example of a control element used for the method of FIG. 21 according to various examples.

### DETAILED DESCRIPTION

Various examples will be described in detail with reference to the accompanying drawings. Wherever possible, the same reference numbers may be used throughout the drawings to refer to the same or like parts. Different reference numbers may be used to refer to different, same, or similar parts. References made to particular examples and implementations are for illustrative purposes, and are not intended to limit the scope of the disclosure or the claims.

Some modern communication devices, referred to herein as a wireless communication device, User Equipment (UE), or Mobile Station (MS), may include any one or all of cellular telephones, smart phones, personal or mobile multi-media players, personal data assistants, laptop computers, personal computers, tablet computers, smart books, palm-top computers, wireless electronic mail receivers, multimedia Internet-enabled cellular telephones, wireless gaming controllers, and similar personal electronic devices. Such a wireless communication device may include at least one Subscriber Identity Module (SIM), a programmable processor, memory, and circuitry for connecting to two or more mobile communication networks.

A wireless communication device may include one or more SIMs that provide users of the wireless communication devices with access to one or multiple separate mobile communication networks. The mobile communication networks may be supported by Radio Access Technologies (RATs). The wireless communication device may be configured to connect to one or more base stations via one or more RATs. Examples of RATs may include, but are not limited to, Frequency Division Multiple Access (FDMA), Time Division Multiple Access (TDMA), Code Division Multiple Access (CDMA) (particularly, Evolution-Data Optimized (EVDO)), Universal Mobile Telecommunications Systems (UMTS) (particularly, Wideband Code Division Multiple Access (WCDMA), Long Term Evolution (LTE), High-Speed Downlink Packet Access (HSDPA), and the like), Global System for Mobile Communications (GSM), Code Division Multiple Access 1x Radio Transmission Technology (1x), General Packet Radio Service (GPRS), Wi-Fi, Personal Communications Service (PCS), and other protocols that may be used in a wireless communications network or a data communications network. Each RAT may be associated with at least one subscription or SIM.

A wireless communication device provided with a plurality of SIMs and connected to two or more separate (or same) subscriptions or networks with one subscription or network being active at a given time is a Multi-SIM-Multi-Standby (MSMS) communication device. In one example, the MSMS communication device may be a Dual-SIM-Dual-Standby (DSDS) communication device, which may include two SIMs that may both be active on standby, but one is deactivated when the other one is in use. In another example, the MSMS communication device may be a Triple-SIM-Triple-Standby (TSTS) communication device, which includes three SIMs that may all be active on standby, where two may be deactivated when the third one is in use. In other examples, the MSMS communication device may be other suitable multi-SIM communication devices, with, for example, four or more SIMs, such that when one is in use, the others may be deactivated.

On the other hand, a wireless communication device that includes a plurality of SIMs and connects to two or more separate (or same) subscriptions or networks with two or more subscriptions or networks being active at a given time may be a MSMA (Multi-SIM-Multi-Active) communication device. An example MSMA communication device may be a Dual-SIM-Dual-Active (DSDA) communication device, which may include two SIMs. Both SIMs may remain active. In another example, the MSMA device may be a Triple-SIM-Triple-Active (TSTA) communication device, which may include three SIM. All three SIMs may remain active. In other examples, the MSMA communication device may be other suitable multi-SIM communication devices with four or more SIMs, all of which may be active.

Generally, examples described herein may be applicable to a MSMS wireless communication device having at least a first SIM and a second SIM. Illustrating with a non-limiting example, the first SIM may be associated with a first subscription, and the second SIM may be associated with a second subscription.

As used herein, the terms "SIM," "SIM card," and "subscriber identification module" may be used interchangeably to refer to a memory that may be an integrated circuit or embedded into a removable card, and that stores an International Mobile Subscriber Identity (IMSI), related key, and/or other information used to identify and/or authenticate a wireless device on a network and enable communication services with the network. Because the information stored in a SIM may be the wireless device to establish a communication link for a particular communication service with a particular network, the term "SIM" may also be used herein as a shorthand reference to the communication service (e.g., the networks, the subscriptions, the services, and/or the like) associated with and enabled by the information (e.g., in the form of various parameters) stored in a particular SIM as the SIM and the communication network, as well as the services and RATs supported by that network, correlate to one another.

Examples described herein relate to a control element extension for concurrent radio access technologies (CRAT). A control element can be one or more data packets or another form of electronic message communicated between a wireless communication device and a network base station. The control element can include information relating to network events, capabilities, or parameters. For example, in some examples the control element can include information relating to an extended signaling capability of the wireless communication device, a periodic or aperiodic tune-away of a SIM associated with the wireless communication device, a network parameter reset, a state mismatch, or a timing synchronization. The information included in the control element can be received by the network base station, and can be used to improve network performance.

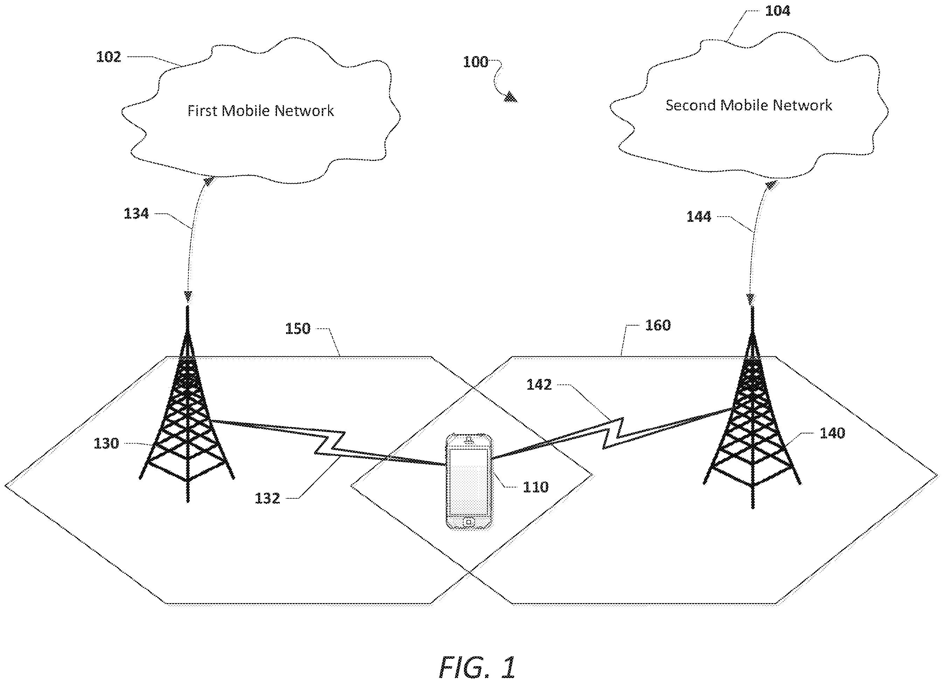

Various examples may be implemented within a communication system 100, an example of which is illustrated in FIG. 1. Referring to FIG. 1, a first mobile network 102 and a second mobile network 104 may each associate with a plurality of cellular base stations (e.g., a first base station 130 and a second base station 140, respectively). The first base station 130 may broadcast the first mobile network 102 in a first serving cell 150. The second base station 140 may broadcast the second mobile network 104 in a second serving cell 160. A wireless communication device 110 may be associated with (within effective boundaries of) both the first serving cell 150 and the second serving cell 160.

The wireless communication device 110 may be in communication with the first mobile network 102 through a first cellular connection 132 to the first base station 130. The first cellular connection 132 may correspond to the first RAT of the wireless communication device 110. The wireless communication device 110 may also be in communication with the second mobile network 104 through a second cellular connection 142 to the second base station 140. The second cellular connection 142 may correspond to the second RAT of the wireless communication device 110, as in a multi-SIM context. The first base station 130 may be in communication with the first mobile network 102 over a wired or wireless connection 134. The second base station 140 may be in communication with the second mobile network 104 over a wired or wireless connection 144.

The first cellular connection 132 and the second cellular connection 142 may be made through two-way wireless communication links. Each of the wireless communication links may be enabled by any suitable protocol including, but not limited to, FDMA, TDMA, CDMA (e.g., EVDO), UMTS (e.g., WCDMA, LTE, HSDPA, or the like), GSM, 1x, GPRS, Wi-Fi, PCS, and/or another protocol used in a wireless communications network or a data communications network. By way of illustrating with a non-limiting example, the first cellular connection 132 may be an LTE connection. The second cellular connection 142 may be an LTE connection. Other RATs (such as, but not limited to, WCDMA, HSDPA, EVDO, and the like) may be implemented in a similar manner.

Each of the first base station 130 and the second base station 140 may include at least one antenna group or transmission station located in the same or different areas. The at least one antenna group or transmission station may be associated with signal transmission and reception. Each of the first base station 130 and the second base station 140 may include one or more processors, modulators, multiplexers, demodulators, demultiplexers, antennas, and the like for performing the functions described herein. In some examples, the first base station 130 and the second base station 140 may be an access point, Node B, evolved Node B (eNodeB or eNB), base transceiver station (BTS), or the like.

In various examples, the wireless communication device 110 may be configured to access the first mobile network 102 and the second mobile network 104 by virtue of the multi-SIM and/or the multi-mode SIM configuration of the wireless communication device 110 (e.g., via the first cellular connection 132 and the second cellular connection 142). When a SIM corresponding to a RAT is inserted, the wireless communication device 110 may access the mobile communication network associated with that RAT based on the information stored on the SIM through registrations and call setups, as described herein.

While the wireless communication device 110 is shown connected to the mobile networks 102 and 104 via two cellular connections, in other examples (not shown), the wireless communication device 110 may establish additional network connections using at least one additional RAT.

In some examples, the wireless communication device 110 may establish a wireless connection with a peripheral device (not shown) used in connection with the wireless communication device 110. For example, the wireless communication device 110 may communicate over a Bluetooth® link with a Bluetooth-enabled personal computing device (e.g., a "smart watch"). In some examples, the wireless communication device 110 may establish a wireless connection with a wireless access point (not shown), such as over a Wi-Fi connection. The wireless access point may be configured to connect to the Internet or another network over a wired connection.

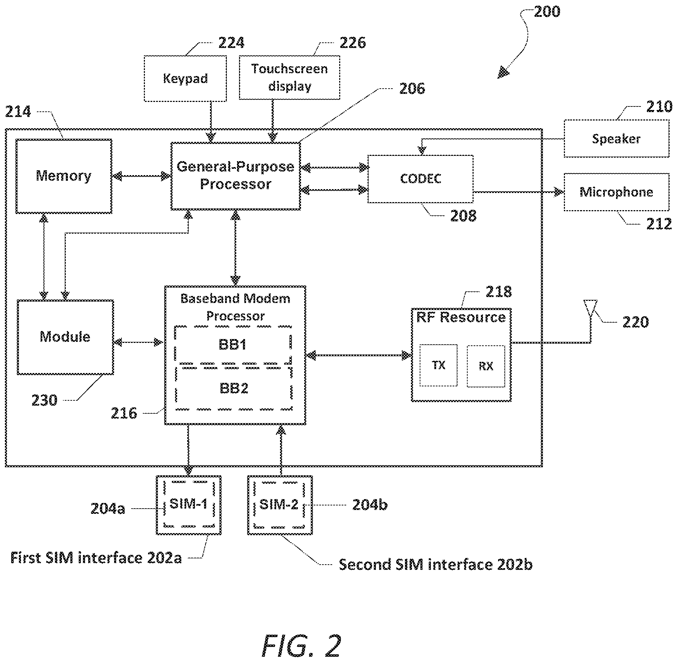

FIG. 2 is a functional block diagram of a wireless communication device 200 suitable for implementing various examples. According to various examples, the wireless communication device 200 may be the wireless communication device 110 as described with reference to FIG. 1. Referring to FIGS. 1-2, the wireless communication device 200 may include a first SIM interface 202a, which may receive a first identity module SIM-1 204a that is associated with the first subscription (corresponding to the first mobile network 102). The wireless communication device 200 may also include a second SIM interface 202b, which may receive a second identity module SIM-2 204b that is associated with the second subscription (corresponding to the second mobile network 104).

A SIM (e.g., SIM-1 204a, SIM-2 204b, and/or the like) in various examples may be a Universal Integrated Circuit Card (UICC) that is configured with SIM and/or Universal SIM (USIM) applications, enabling access to GSM and/or UMTS networks. The UICC may also provide storage for a phone book and other applications. Alternatively, in a CDMA network, a SIM may be a UICC removable user identity module (R-UIM) or a CDMA Subscriber Identity Module (CSIM) on a card. A SIM card may have a Central Processing Unit (CPU), Read Only Memory (ROM), Random Access Memory (RAM), Electrically Erasable Programmable Read-Only Memory (EEPROM) and Input/Output (I/O) circuits. An Integrated Circuit Card Identity (ICCID) SIM serial number may be printed on the SIM card for identification. However, a SIM may be implemented within a portion of memory of the wireless communication device 200, and thus need not be a separate or removable circuit, chip, or card.

A SIM used in various examples may store user account information, an IMSI, a set of SIM Application Toolkit (SAT) commands, and other network provisioning information, as well as provide storage space for phone book database of the user's contacts. As part of the network provisioning information, a SIM may store home identifiers (e.g., a System Identification Number (SID)/Network Identification Number (NID) pair, a Home PLMN (HPLMN) code, etc.) to indicate the SIM card network operator provider.

The wireless communication device 200 may include at least one controller, such as a general-purpose processor 206, which may be coupled to a coder/decoder (CODEC) 208. The CODEC 208 may in turn be coupled to a speaker 210 and a microphone 212. The general-purpose processor 206 may also be coupled to at least one memory 214. The general-purpose processor 206 may include any suitable data processing device, such as a microprocessor. In the alternative, the general-purpose processor 206 may be any suitable electronic processor, controller, microcontroller, or state machine. The general-purpose processor 206 may also be implemented as a combination of computing devices (e.g., a combination of a Digital Signal Processor (DSP) and a microprocessor, a plurality of microprocessors, at least one microprocessors in conjunction with a DSP core, or any other such configuration).

The memory 214 may be a non-transitory processor-readable storage medium that stores processor-executable instructions. For example, the instructions may include routing communication data relating to the first or second subscription though a corresponding baseband-RF resource chain. The memory 214 may include any suitable internal or external device for storing software and data. Examples of the memory 214 may include, but are not limited to, RAM, ROM, floppy disks, hard disks, dongles or other Recomp Sensor Board (RSB) connected memory devices, or the like. The memory 214 may store an Operating System (OS), user application software, and/or executable instructions. The memory 214 may also store application data, such as an array data structure.

The general-purpose processor 206 and the memory 214 may each be coupled to baseband modem processor 216. The SIMs (e.g., the SIM-1 204a, the SIM-2 204b, and/or the like) in the wireless communication device 200 may be associated with at least one baseband-RF resource chain. A baseband-RF resource chain may include the baseband modem processor 216, which may perform baseband/modem functions for communications on the SIMs. The baseband modem processor 216 may include one or more amplifiers and radios, referred to generally herein as a RF resource 218 or RF chain.

The examples described herein may be applicable to wireless communication devices in which the SIMs 204a and 204b share a common set of RF resource (particularly, the RF resource 218). Examples described herein may also be applicable to wireless communication devices in which each of the SIMs 204a and 204b has a separate RF resource, but activities of one of the SIMs 204a and 204b may be deactivated while the other one of the SIMs 204a and 204b is active.

The RF resource 218 may include at least one transceiver that performs transmit/receive functions for the associated SIMs 204a and 204b of the wireless communication device 200. The RF resource 218 may include separate transmit and receive circuitry, or may include a transceiver that combines transmitter and receiver functions. The RF resource 218 may be coupled to a wireless antenna 220. The RF resource 218 may also be coupled to the baseband modem processor 216.

In some examples, the general-purpose processor 206, the memory 214, the baseband modem processor 216, and the RF resource 218 may be included in the wireless communication device 200 as a system-on-chip. In some examples, the SIMs 204a and 204b and their corresponding interfaces 202a, 202b may be external to the system-on-chip. Further, various input and output devices may be coupled to components on the system-on-chip, such as interfaces or controllers. Example user input components suitable for use in the wireless communication device 200 may include, but are not limited to, a keypad 224, a touchscreen display 226, and the microphone 212.

In some examples, the keypad 224, the touchscreen display 226, the microphone 212, or a combination thereof, may perform the function of receiving a request to initiate an outgoing call. For example, the touchscreen display 226 may receive a selection of a contact from a contact list or receive a telephone number. In another example, either or both of the touchscreen display 226 and the microphone 212 may perform the function of receiving a request to initiate an outgoing call. For example, the touchscreen display 226 may receive a selection of a contact from a contact list or to receive a telephone number. As another example, the request to initiate the outgoing call may be in the form of a voice command received via the microphone 212. Interfaces may be provided between the various software modules and functions in the wireless communication device 200 to enable communication between them.

In some examples, the module 230 may be implemented within the general-purpose processor 206. For example, the module 230 may be implemented as a software application stored within the memory 214 and executed by the general-purpose processor 206. Accordingly, such examples can be implemented with minimal additional hardware costs. However, other examples relate to systems and processes implemented with dedicated hardware specifically configured for performing operations described herein with respect to the module 230. For example, the module 230 may be implemented as a separate processing component (i.e., separate from the general-purpose processor 206). The module 230 may be coupled to the memory 214, the general processor 206, the baseband processor 216, and/or the RF resource 218 for performing the function described herein.

Hardware and/or software for the functions may be incorporated in the wireless communication device 200 during manufacturing, for example, as a part of a configuration of an original equipment manufacturer (OEM) of the wireless communication device 200. In further examples, such hardware and/or software may be added to the wireless communication device 200 post-manufacture, such as by installing one or more hardware devices and/or software applications onto the wireless communication device 200.

In some examples, the wireless communication device 200 may include, among other things, additional SIM cards, SIM interfaces, at least another RF resource associated with the additional SIM cards, and additional antennas for connecting to additional mobile networks.

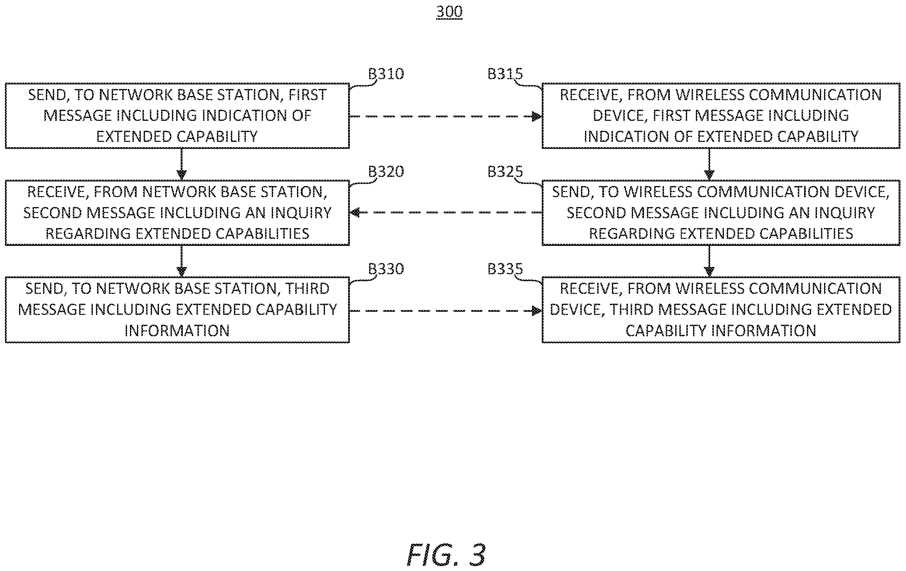

FIG. 3 is a process flow diagram illustrating an example of a method 300 for communicating an extended capability according to various examples. In some examples, the general-purpose processor 206 of the wireless communication device 200 can implement a layered operating system. For example, a using the physical hardware of the general-purpose processor 206 as a first layer, the general-purpose processor 206 may implement a second software layer that may be referred to as a media access control (MAC) layer, as well as a third layer that may be referred to as a radio resource control (RRC) layer. In some examples, the blocks of the method 300 that are performed by the wireless communication device may primarily be executed within the third layer.

Referring to FIGS. 1-3, in some examples, the blocks on the left-hand side of FIG. 3 (i.e., the even numbered blocks) can be performed by a wireless communication device, such as the wireless communication device 200, while the blocks on the right-hand side of FIG. 3 (i.e., the odd numbered blocks) can be performed by a network base station such as the base station 130 (and a processor associated thereof). The broken arrows in FIG. 3 show the direction of the flow of data at each block of the method 300. Thus, broken arrows extending from left to right in FIG. 3 can represent data that is transmitted from the wireless communication device 200 to the base station 130. Similarly, broken arrows extending from right to left in FIG. 3 can represent data that is transmitted from the base station 130 to the wireless communication device 200.

The wireless communication device 200 can send a first message including an indication of at least one extended capability to the base station 130 at block B310. At block B315, the base station 130 can receive the first message including the indication of at least one extended capability from the wireless communication device 200. In some examples, the first message may include an indication of an extended capability, but may not include any particular information about the extended network capability, such as a type of extended capability or a parameter value associated with the capability. For example, in some examples, the first message can include a tag indicating that the wireless communication device 200 has at least one extended capability.

The base station 130 can send to the wireless communication device 200 a second message including an inquiry regarding extended capabilities at block B325. At block B320, the wireless communication device 200 can receive, from the base station 130, the second message including the inquiry regarding extended capabilities. In some examples, the base station 130 can be configured to send the second message in response to receiving the first message from the wireless communication device 200 in block B315. In some other examples, the base station 130 can be configured to send the second message without first having received the first message.

The wireless communication device 200 can send a third message including extended capability information to the base station 130 at block B330. At block B335, the base station 130 can receive the third message including the extended capability information from the wireless communication device 200. In some examples, the third message can include detailed information regarding the at least one extended capability identified in the first message sent by the wireless communication device 200 at Block 310. For example, the third message can include information identifying the at least one extended capability from among a set of extended capabilities. The third message also may include one or more values for parameters associated with the at least one extended capability. In some examples, after the base station 130 receives the third message, the base station 130 can extract the extended capability information from the third message. The base station 130 also can store the extended capability information in a memory element.

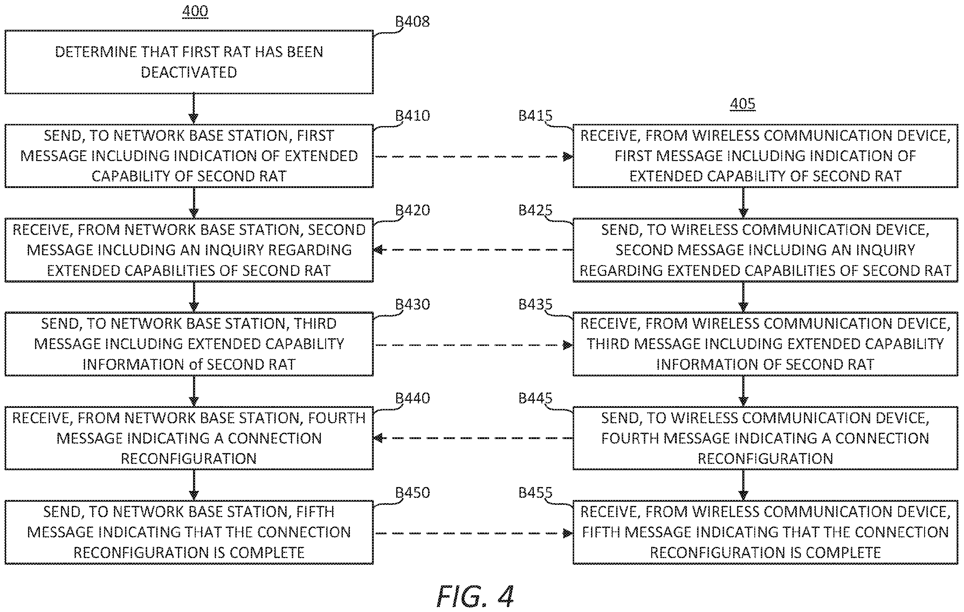

FIG. 4 is a process flow diagram illustrating an example of a method 400 for communicating an extended capability of a second RAT according to various examples. Referring to FIGS. 1, 2, and 4, in some examples, the blocks on the left-hand side of FIG. 4 (i.e., the even numbered blocks) can be performed by a wireless communication device, such as the wireless communication device 200, while the blocks on the right-hand side of FIG. 4 (i.e., the odd numbered blocks) can be performed by a network base station, such as the base station 130. The broken arrows in FIG. 4 show the direction of the flow of data at each block of the method 400. Thus, broken arrows extending from left to right in FIG. 4 can represent data that is transmitted from the wireless communication device 200 to the base station 130. Similarly, broken arrows extending from right to left in FIG. 4 can represent data that is transmitted from the base station 130 to the wireless communication device 200.

The wireless communication device 200 can determine that a first RAT has been deactivated at block B408. The wireless communication device 200 can send a first message including an indication of at least one extended capability of a second RAT to the base station 130 at block B410. At block B415, the base station 130 can receive the first message including the indication of at least one extended capability of the second RAT from the wireless communication device 200. In some examples, the first message also can include information identifying the type of the second RAT. For example, the second RAT may be UTS, GSM, or LTE, and the first message may include corresponding identification information. In some examples, the first message also can include other information about the second RAT, such as static or semi-static parameter values. For example, the first message may include information identifying the typical duration for page decode for the second RAT.

In some examples, the capabilities of the second RAT, including any extended capabilities, may differ from those of the first RAT. In some other examples, the capabilities of the second RAT may be the same as those of the first RAT. The first message may include an indication of an extended capability, but may not include any particular information about the extended network capability, such as a type of extended capability or a parameter value associated with the capability. For example, in some examples, the first message can include a tag indicating that the wireless communication device 200 has at least one extended capability, but may not identify the particular extended capability.

The base station 130 can send to the wireless communication device 200 a second message including an inquiry regarding the extended capabilities of the second RAT at block B425. At block B420, the wireless communication device 200 can receive, from the base station 130, the second message including the inquiry regarding the extended capabilities of the second RAT. In some examples, the base station 130 can be configured to send the second message in response to receiving the first message from the wireless communication device 200 in Block 415. In some other examples, the base station 130 can be configured to send the second message without first having received the first message.

The wireless communication device 200 can send a third message including first extended capability information to the base station 130 at block B430. At block B435, the base station 130 can receive the third message including the extended capability information from the wireless communication device 200. In some examples, the third message can include detailed information regarding the at least one extended capability of the second RAT identified in the first message sent by the wireless communication device 200 at block 310. For example, the third message can include information identifying the at least one extended capability from among a set of extended capabilities. The third message also may include one or more values for parameters associated with the at least one extended capability of the second RAT. In some examples, after the base station 130 receives the third message, the base station 130 can extract the extended capability information from the third message and can store the extended capability information in a memory element.

The base station 130 can send to the wireless communication device 200 a fourth message including a connection reconfiguration at block B425. At block B420, the wireless communication device 200 can receive, from the base station 130, the fourth message including the connection reconfiguration. In some examples, the base station 130 can be configured to send the fourth message in response to receiving the first message from the wireless communication device 200 in block 415. The reconfiguration can allow the wireless communication device 200 to communicate with the base station 130 according to the second RAT. In some implementations the connection reconfiguration may be a radio resource control (RRC) connection reconfiguration.

The wireless communication device 200 can reconfigure the connection to the base station 130 based on the fourth message. The wireless communication device 200 can then send a fifth message indicating that the connection reconfiguration is complete to the base station 130 at block B430. At block B435, the base station 130 can receive the fifth message indicating that the connection reconfiguration is complete from the wireless communication device 200. The wireless communication device 200 and the base station 130 can the communicate according to the second RAT.

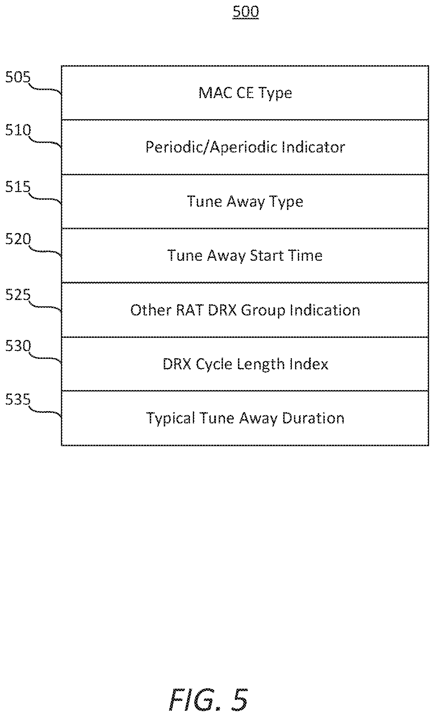

FIG. 5 is a block diagram of a control element 500 associated with a tune away event according to various examples. In some examples, the control element 500 can be one or more data packets configured to include the information shown in FIG. 5. Referring to FIGS. 1, 2, and 5, and as discussed above in connection with FIG. 3, the general-purpose processor 206 of the wireless communication device 200 can implement a layered operating system. In some examples, the first layer can be the physical layer, the a second can be the MAC layer, and the third layer can be an RRC layer. In some examples, the control element 500 can be processed primarily within the second layer (i.e., the MAC layer).

The control element 500 can include a MAC control element type 505. For example, the MAC control element type 505 can identify the control element 500 as being associated with a tune away event. The control element 500 also can include a periodic/aperiodic indicator, which can indicate whether the control element 500 is associated with a periodic tune away event or an aperiodic tune away event. For example, a periodic tune away event may occur at regularly scheduled intervals, while an aperiodic tune away event may occur at irregular intervals and may not be scheduled in advance. In some implementations, the periodic/aperiodic indicator can be a bit flag. For example, a value of 0 for the periodic/aperiodic indicator can be used to indicate that the control element 500 is associated with a periodic tune away event, while a value of 1 may be used to indicate that the control element 500 is associated with an aperiodic tune away event.

The control element 500 can include a tune away type 515. In some examples, the tune away type 515 can indicate the ability of the wireless communication device 200 to receive data during tune away. For example, the tune away type 515 can indicate whether one or more SIMs are capable of receiving data during tune away. The control element 500 also can include a tune away start time 520 and another RAT DRX group indication 525. The other RAT DRX group indication may indicate a different RAT according to the number of concurrent RATs that are simultaneously supported by the wireless communication device 200. The control element 500 also can include a DRX cycle length index. In some examples, the DRX cycle length index can be used in connection with a DRX cycle index lookup table in order to avoid frame drifting caused by fractional numbers in cycles associated with various RATs. In some examples, the DRX cycle length also can include an indication that periodic tune away events should be canceled indefinitely. In such examples, when periodic tune away events are canceled, tune away may occur in response to unscheduled aperiodic tune away events. The control element 500 also can include a typical tune away duration 535. In some examples, the typical tune away duration 535 can indicate the amount of time that the tune away event is expected to last. When combined with the tune away start time 520, the typical tune away duration can be used to estimate an end time for the tune away event.

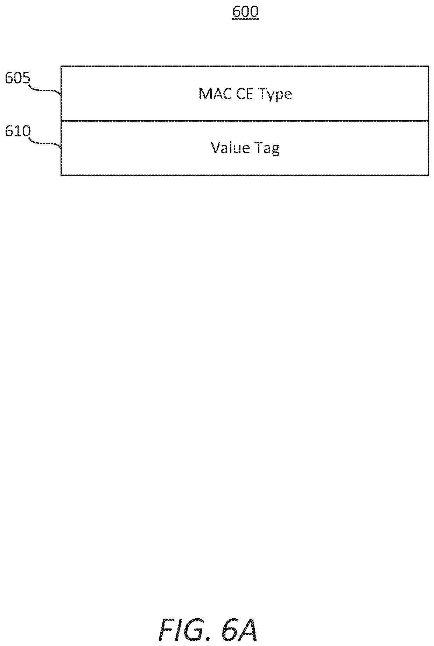

FIG. 6A is a block diagram of a control element 600 associated with a periodic tune away indication according to various examples. Like the control element 500 described above, in some examples, the control element 600 can be implemented as one or more data packets, and may be generated and/or processed primarily within the MAC layer of a wireless communication device such as the wireless communication device 200 shown in FIG. 2.

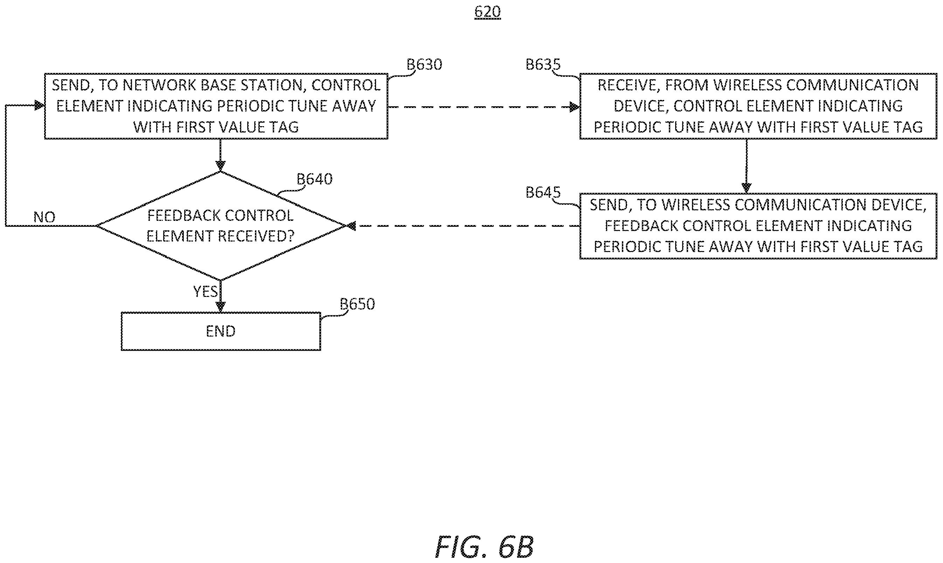

The control element 600 can include a MAC control element type 605. For example, the MAC control element type 605 can be similar to the MAC control element type 505 discussed above in FIG. 5, and in this case can identify the control element 600 as being associated with a periodic tune away event. The control element 600 also can include a value tag 610. The value tag 610 can be or can include a value that uniquely identifies the control element 600 from among other control elements. In some examples, the value tag 610 can be used in an acknowledgment from a network that may receive the control element 600. Such an acknowledgment process is described further below in connection with FIG. 6B.

FIG. 6B is a process flow diagram illustrating an example of a method 600 for indicating a periodic tune away according to various examples. Referring to FIGS. 1, 2, and 6, in some examples, the blocks on the left-hand side of FIG. 6B (i.e., the even numbered blocks) can be performed by a wireless communication device, such as the wireless communication device 200, while the blocks on the right-hand side of FIG. 6B (i.e., the odd numbered blocks) can be performed by a network base station, such as the base station 130. The broken arrows in FIG. 6 show the direction of the flow of data at each block of the method 600. Thus, broken arrows extending from left to right in FIG. 6B can represent data that is transmitted from the wireless communication device 200 to the base station 130. Similarly, broken arrows extending from right to left in FIG. 6B can represent data that is transmitted from the base station 130 to the wireless communication device 200.

The wireless communication device 200 can send a control element indicating a periodic tune away of a first SIM to the base station 130 at block B630. At block B635, the base station 130 can receive control element indicating a periodic tune away of a first SIM from the wireless communication device 200. In some examples, the control element sent by the wireless communication device 200 can be similar to the control element 600 shown in FIG. 6A.

The base station 130 can send a feedback control element to the wireless communication device 200 at block B645. In some examples, the base station 130 can send the feedback control element in response to receiving the control element in block B635. The feedback control element can include a value tag that matches the value tag included in the control element that was received by the base station in block B635. The wireless communication device 200 can determine whether the feedback control element has been received from the base station 130 at block B640. In some examples, the wireless communication device 200 can be configured to check for the receipt of the feedback control element after a predetermined amount of time has passed since the control element was sent to the base station in block B630. The wireless communication device 200 can distinguish a correct acknowledgment control element from among other control elements by comparing a value tag associated with the feedback control element to the value tag associated with the control element that was sent to the base station 130 in block B630. In some implementations, the wireless communication device can determine that the feedback control element has been received by determining a match between such value tags. If the wireless communication device 200 determines that the feedback control element has not been received, the wireless communication device 200 returns to block 630 and resends the control element indicating a periodic tune away. On the other hand, if the wireless communication device 200 determines that the feedback control element has been received, the method 620 ends at block B650.

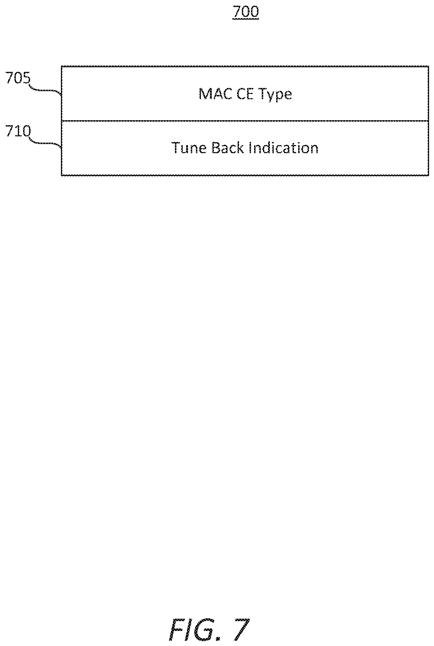

FIG. 7 is a block diagram of a control element associated with a tune back indication according to various examples. Like the control element 500 described above, in some examples, the control element 700 can be implemented as one or more data packets, and can be generated and/or processed primarily within the MAC layer of a wireless communication device such as the wireless communication device 200 shown in FIG. 2.

The control element 700 can include a MAC control element type 705. For example, the MAC control element type 705 can be similar to the MAC control element type 505 discussed above in FIG. 5, and in this case can identify the control element 700 as being associated with a tune back event. The control element 700 also can include a tune back indication 710. The tune back indication 710 can indicate which cells or secondary cells are in a tune away state, and which cells or secondary cells are in a tune back state. For example, in some implementations, each cell or secondary cell can be assigned an index value, and the tune back indication 710 can be or can include a series of bits each corresponding to a unique cell or secondary cell index value and having a value that indicates whether the cell or secondary cell associated with that index value is in a tune away state or a tune back state.

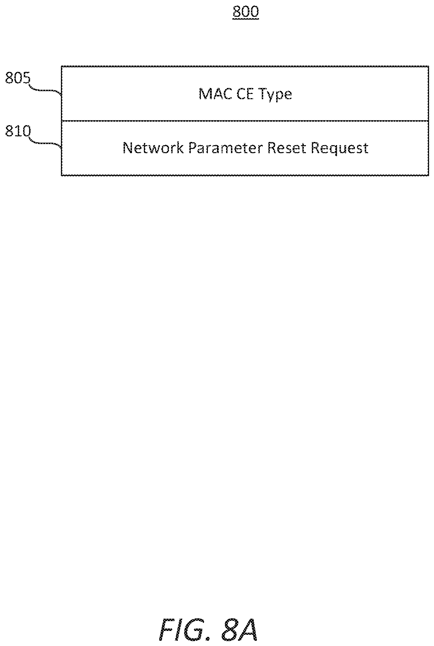

FIG. 8A is a block diagram of a control element 800 associated with a network parameter reset according to various examples. Referring to FIGS. 2 and 8A, in various examples, the network parameter associated with the control element 800 can be a rank indication (RI), which may indicate that number of layers that the wireless communication device 200 is capable of receiving. In some examples, the network parameter associated with the control element 800 can be a channel quality indication (CQI), which can be an indication of the data rate which can be supported by a channel when taking into account the signal-to-interference-plus-noise ratio (SINR) and the characteristics of the wireless communication device 200. In still other examples, the network parameter associated with the control element 800 can be a modulation and coding scheme (MCS), which may be selected based on part on the RAT and the CQI. In other examples, the network parameter associated with the control element 800 can be any another network parameter. Like the control element 500 described above, in some examples, the control element 800 can be implemented as one or more data packets, and can be generated and/or processed primarily within the MAC layer of a wireless communication device such as the wireless communication device 200 shown in FIG. 2.

The control element 800 can include a MAC control element type 805. For example, the MAC control element type 805 can be similar to the MAC control element type 505 discussed above in FIG. 5, and in this case can identify the control element 800 as being associated with a network parameter reset request. The control element 800 also can include a network parameter reset request 810. The network parameter reset request 810 can indicate which cells or secondary cells use an aperiodic CSI report. For example, in some implementations, each cell or secondary cell can be assigned an index value. The network parameter reset request 810 can be divided into blocks each associated with a particular cell or secondary cell. Each block in the network parameter reset request 810 can have a value indicating whether the downlink carrier of the cell or secondary cell associated with that index value uses a CSI report. Similarly, each block in the network parameter reset request 810 also can have a value indicating whether the uplink carrier of the cell or secondary cell associated with that index value should have a network parameter, such as MCS or resource block (RB), reverted to the value it had before the most recent tune away event. In general, RB may represent the smallest unit for resource assignment of a base station, such as the base station 130 shown in Figure 1.

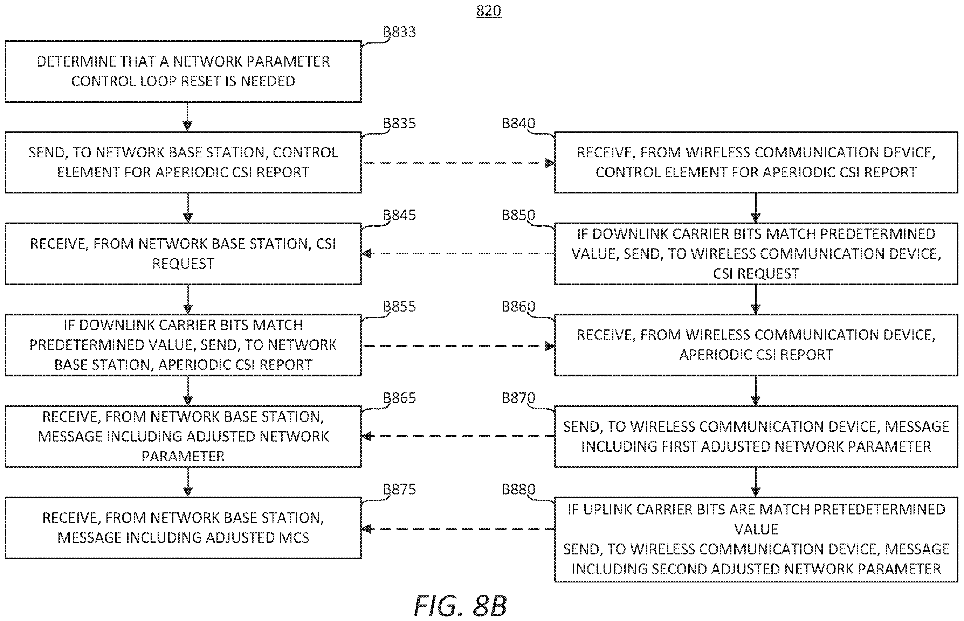

FIG. 8B is a process flow diagram illustrating an example of a method 820 for initiating a network parameter reset according to various examples. Referring to FIGS. 1, 2, and 8B, in some examples, the blocks on the left-hand side of FIG. 8B (i.e., the odd numbered blocks) can be performed by a wireless communication device, such as the wireless communication device 200, while the blocks on the right-hand side of FIG. 8B (i.e., the even numbered blocks) can be performed by a network base station, such as the base station 130. The broken arrows in FIG. 8B show the direction of the flow of data at each block of the method 820. Thus, broken arrows extending from left to right in FIG. 8B can represent data that is transmitted from the wireless communication device 200 to the base station 130. Similarly, broken arrows extending from right to left in FIG. 8B can represent data that is transmitted from the base station 130 to the wireless communication device 200.

The wireless communication device 200 can determine that a network parameter reset is needed at block B833. Network parameters that may use a reset can include, without limitation, RI, CQI, and MCS. The wireless communication device 200 can send a control element for an aperiodic CSI report to the base station 130 at block B835. At block B840, the base station 130 can receive the control element for an aperiodic CSI report from the wireless communication device 200. In some examples, the control element can be similar to the control element 800 described above in connection with FIG. 8A.

The base station 130 can extract network parameter reset request information from the control element. For example, as discussed above, the control element can have a network parameter reset request that indicates which cells or secondary cells use an aperiodic CSI report. The base station can examine the network parameter reset request to determine which downlink carrier bits match a predetermined value indicating that a CSI request is used. The base station 130 can send to the wireless communication device 200 a CSI request if it is determined that at least some of the downlink carrier bits match the predetermined value at block B850. At block B845, the wireless communication device 200 can receive, from the base station 130, the CSI request.

The wireless communication device 200 can extract network parameter reset request information from the CSI report received from the base station 130. For example, the wireless communication device 200 can examine the CSI request to determine which downlink carrier bits match a predetermined value indicating that an aperiodic CSI report is requested. The wireless communication device 200 can send to the base station 130 an aperiodic CSI report if it is determined that at least some of the downlink carrier bits match the predetermined value at block B855. At block B860, the base station 130 can receive the aperiodic CSI report from the wireless communication device 200. At block B870, the base station 130 can send to the wireless communication device 200 a message including adjusted network parameter values. In some implementations, the parameters whose values are to be adjusted may include RI, PMI, or CQI. At block 865, the wireless communication device receives the message including the adjusted network parameters. The base station 130 can determine whether the uplink carrier bits match a predetermined value and, if they do, can send to the wireless communication device 200 a message including an adjusted MCS. At block 875, the wireless communication device 200 can receive the message including the adjusted MCS.

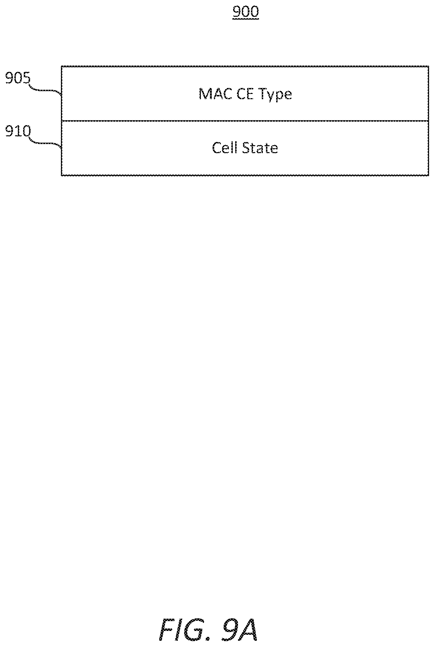

FIG. 9A is a block diagram of a control element 900 associated with cell state synchronization to various examples. Like the control element 500 described above, in some examples, the control element 900 can be implemented as one or more data packets, and can be generated and/or processed primarily within the MAC layer of a wireless communication device such as the wireless communication device 200 shown in FIG. 2.

The control element 900 can include a MAC control element type 905. For example, the MAC control element type 905 can be similar to the MAC control element type 505 discussed above in FIG. 5, and in this case can identify the control element 900 as being associated with cell state synchronization. The control element 900 also can include cell state information 910. In some examples, each cell or secondary cell can be assigned an index value. The cell state information 910 can be divided into blocks each associated with a particular cell or secondary cell. Each block in the cell state information 910 can have a value indicating whether the cell or secondary cell associated with that index value is activated or deactivated.

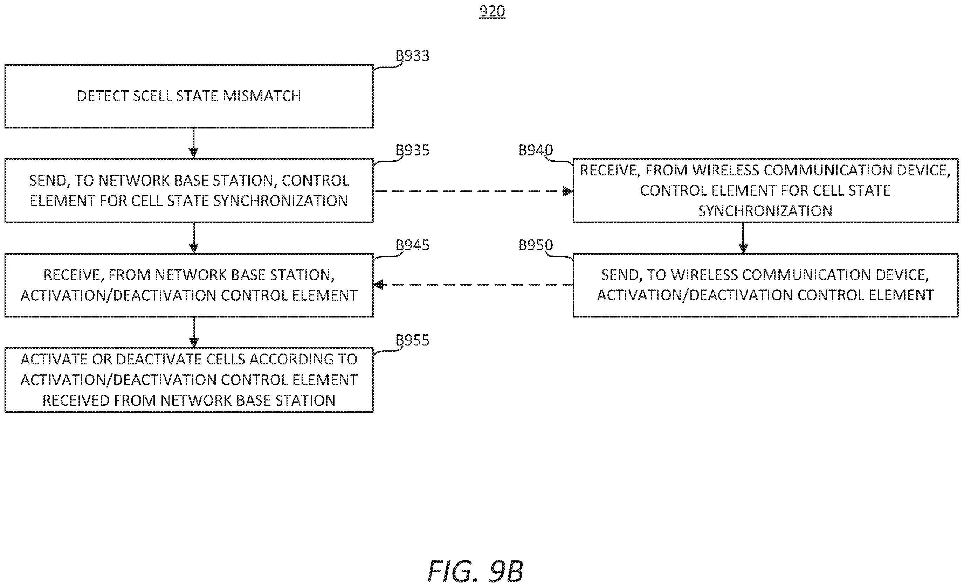

FIG. 9B is a process flow diagram illustrating an example of a method 920 for initiating cell state synchronization according to various examples. Referring to FIGS. 1, 2, and 9B, in some examples, the blocks on the left-hand side of FIG. 9B (i.e., the odd numbered blocks) can be performed by a wireless communication device, such as the wireless communication device 200, while the blocks on the right-hand side of FIG. 9B (i.e., the even numbered blocks) can be performed by a network base station, such as the base station 130. The broken arrows in FIG. 9B show the direction of the flow of data at each block of the method 920. Thus, broken arrows extending from left to right in FIG. 9B can represent data that is transmitted from the wireless communication device 200 to the base station 130. Similarly, broken arrows extending from right to left in FIG. 9B can represent data that is transmitted from the base station 130 to the wireless communication device 200.

The wireless communication device 200 can detect a cell state mismatch at block B933. The wireless communication device 200 can send a control element for cell state synchronization to the base station 130 at block B935. At block B940, the base station 130 can receive the control element for cell state synchronization from the wireless communication device 200. In some examples, the control element for cell state synchronization can be similar to the control element 900 described above in connection with FIG. 9A.

The base station 130 can extract cell state information from the control element. For example, as discussed above, the control element can include cell state information that indicates whether each cell or secondary cell is in an activated or deactivated state. The base station 130 can generate an activation/deactivation control element based on the cell state information, and can send the activation/deactivation control element to the wireless communication device 200 at block B950. At block B945, the wireless communication device 200 can receive, from the base station 130, the activation/deactivation control element. Then, at block 955, the wireless communication device 200 can activate or deactivate cells and secondary cells in accordance with the activation/deactivation control element received from the base station 130.

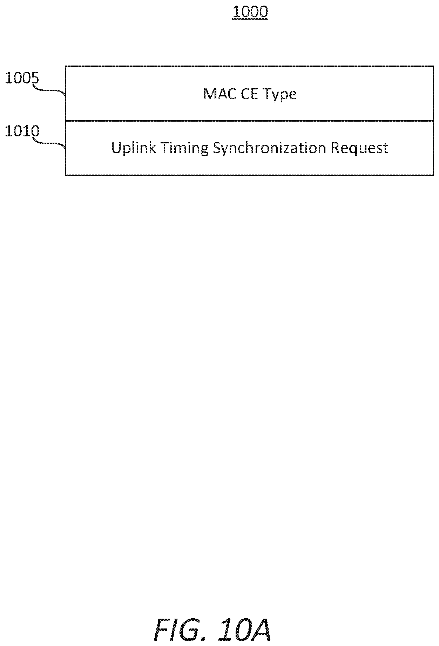

FIG. 10A is a block diagram of a control element associated with uplink timing synchronization to various examples. Like the control element 500 described above, in some examples, the control element 1000 can be implemented as one or more data packets, and can be generated and/or processed primarily within the MAC layer of a wireless communication device such as the wireless communication device 200 shown in FIG. 2.

The control element 1000 can include a MAC control element type 1005. For example, the MAC control element type 1005 can be similar to the MAC control element type 505 discussed above in FIG. 5, and in this case can identify the control element 1000 as being associated with uplink timing synchronization. The control element 1000 also can include an uplink timing synchronization request 1010. The uplink timing synchronization request 1010 can be divided into blocks each representing a timing advance group (TAG). The block associated with each TAG can have values indicating whether the TAG is normal or in need of timing recovery.

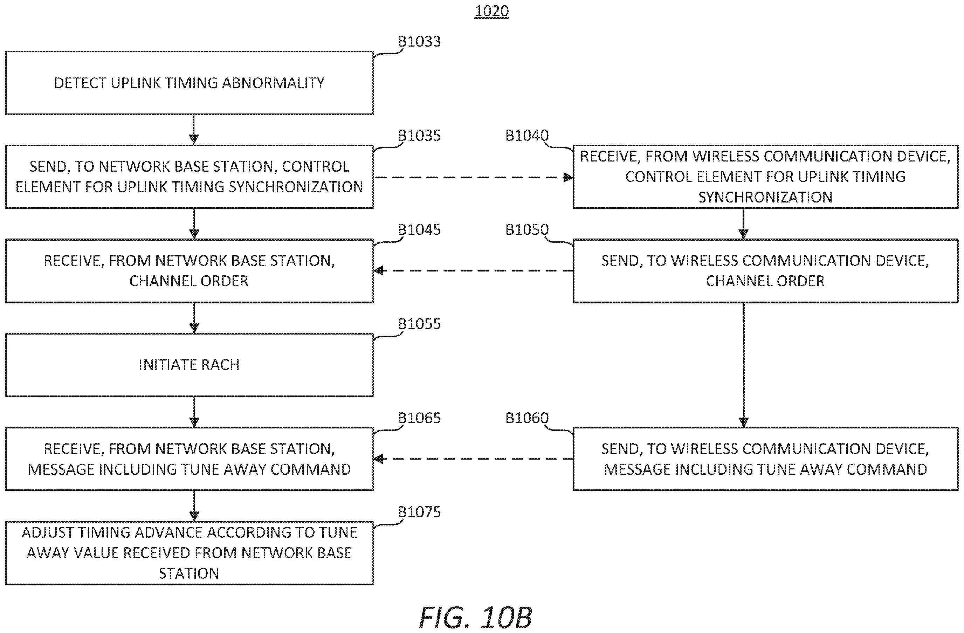

FIG. 10B is a process flow diagram illustrating an example of a method 1020 for initiating uplink timing synchronization according to various examples. Referring to FIGS. 1, 2, and 10B, in some examples, the blocks on the left-hand side of FIG. 10B (i.e., the odd numbered blocks) can be performed by a wireless communication device, such as the wireless communication device 200, while the blocks on the right-hand side of FIG. 10B (i.e., the even numbered blocks) can be performed by a network base station, such as the base station 130. The broken arrows in FIG. 10B show the direction of the flow of data at each block of the method 1020. Thus, broken arrows extending from left to right in FIG. 10B can represent data that is transmitted from the wireless communication device 200 to the base station 130. Similarly, broken arrows extending from right to left in FIG. 10B can represent data that is transmitted from the base station 130 to the wireless communication device 200.

The wireless communication device 200 can detect a timing uplink abnormality at block B1033. The wireless communication device 200 can send a control element for uplink timing synchronization to the base station 130 at block B835. At block B840, the base station 130 can receive the control element for uplink timing synchronization from the wireless communication device 200. In some examples, the control element can be similar to the control element 1000 described above in connection with FIG. 10A.

The base station 130 can send a channel order to the wireless communication device 200 at block B1050. At block B1045, the wireless communication device 200 can receive, from the base station 130, the channel order. In response to receiving the channel order from the base station 130, the wireless communication device 200 can initiate a RACH at block B1055.

At block B1060, the base station 130 can send a message including a tune away command to the wireless communication device 200. The wireless communication device 200 can receive the tune away command from the base station 130 at block B1065. At block B1075, the wireless communication device 200 can adjust the timing advance according to the tune away value included in the tune away command received from the base station 130 at block B1065.

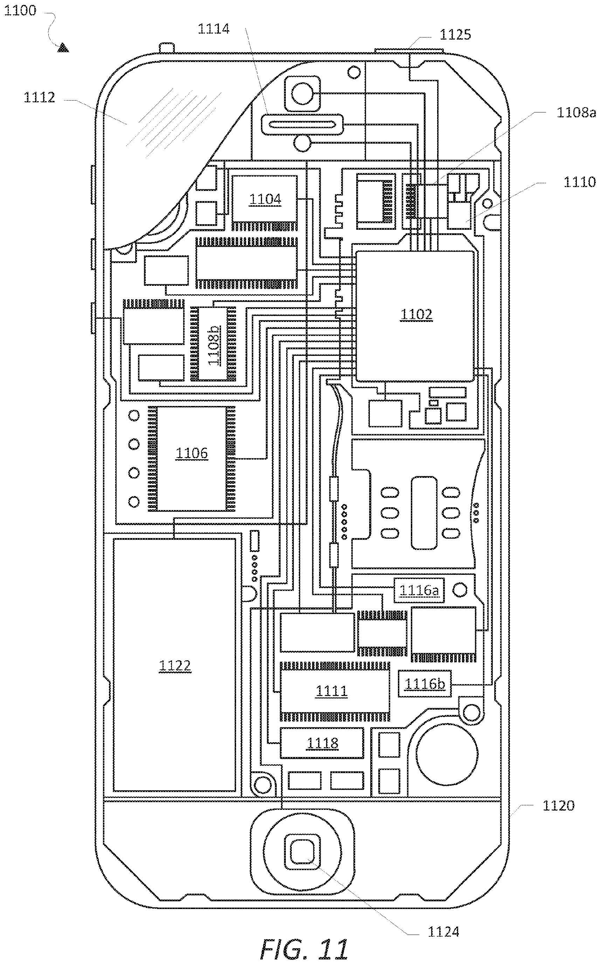

The various examples may be implemented in any of a variety of wireless communication devices 110, 200, and 400, an example of which is illustrated in FIG. 11, as wireless communication device 1100. As such, the wireless communication device 1100 may implement the process and/or the apparatus of FIGS. 1-10B, as described herein.

With reference to FIGS. 1-11, the wireless communication device 1100 may include a processor 1102 coupled to a touchscreen controller 1104 and an internal memory 1106. The processor 1102 may be one or more multi-core integrated circuits designated for general or specific processing tasks. The memory 1106 may be volatile or non-volatile memory, and may also be secure and/or encrypted memory, or unsecure and/or unencrypted memory, or any combination thereof. The touchscreen controller 1104 and the processor 1102 may also be coupled to a touchscreen panel 1112, such as a resistive-sensing touchscreen, capacitive-sensing touchscreen, infrared sensing touchscreen, etc. Additionally, the display of the wireless communication device 1100 need not have touch screen capability.

The wireless communication device 1100 may have one or more cellular network transceivers 1108a, 1108b coupled to the processor 1102 and to at least one antenna 1110 and configured for sending and receiving cellular communications. The transceivers 1108a, 1108b and antenna 1110 may be used with the above-mentioned circuitry to implement the various example methods. The cellular network transceivers 1108a, 1108b may be the RF resource 218. The antenna 1110 may be the antenna 220. The wireless communication device 1100 may include two or more SIM cards 1116a, 1116b, corresponding to SIM-1 204a (first SIM 401) and SIM-2 204b(second SIM 402), coupled to the transceivers 1108a, 1108b and/or the processor 1102. The wireless communication device 1100 may include a cellular network wireless modem chip 1111 (e.g., the baseband modem processor 216) that enables communication via at least one cellular network and is coupled to the processor 1102.

The wireless communication device 1100 may include a peripheral device connection interface 1118 coupled to the processor 1102. The peripheral device connection interface 1118 may be singularly configured to accept one type of connection, or multiply configured to accept various types of physical and communication connections, common or proprietary, such as USB, FireWire, Thunderbolt, or PCIe. The peripheral device connection interface 1118 may also be coupled to a similarly configured peripheral device connection port (not shown).

The wireless communication device 1100 may also include speakers 1114 for providing audio outputs. The wireless communication device 1100 may also include a housing 1120, constructed of a plastic, metal, or a combination of materials, for containing all or some of the components discussed herein. The wireless communication device 1100 may include a power source 1122 coupled to the processor 1102, such as a disposable or rechargeable battery. The rechargeable battery may also be coupled to a peripheral device connection port (not shown) to receive a charging current from a source external to the wireless communication device 1100. The wireless communication device 1100 may also include a physical button 1124 for receiving user inputs. The wireless communication device 1100 may also include a power button 1126 for turning the wireless communication device 1100 on and off.

Referring generally to the FIGS., aspects of a tune-away event (such as, but not limited to, a reference tune-away start time, tune-away duration (in both full tune-away mode or partial tune-away mode), transmission/reception chain capabilities of the RF resource 218 for the partial tune-away mode, and/or the like) may alter frequently. Thus, frequent and timely updates of such aspects of the tune-away event may be provided to a network base station (e.g., the first base station 130) for synchronization purposes. Based on the knowledge of the tune-away events, the network base station may pre-schedule uplink grants for the wireless communication device 200 before scheduled tune-away events, to reduce signaling overhead caused by transmissions of the scheduling requests over a first SIM (e.g., SIM-1 204a) and the potential UL grant delay caused by network base station resource assignment. Thus, the wireless communication device 200 can update the periodical gap pattern to network base station in one timely manner.

Referring to FIGS. 1, 2, and 12, some examples described herein relate to pre-scheduling uplink grants over the first SIM of the wireless communication device 200 (110), before a scheduled tune-away event to the second SIM. As used herein, "pre-scheduling" may refer to scheduling one or more uplink grants over the first SIM at a time or designated time that is before the tune-away event (e.g., a tune-away gap) in which the RF resource 218 may be tuned from the first SIM to the second SIM. Thus, the RF resource 218 may be unavailable to the first SIM during the tune-away event. Another scheduling request may not need to be sent to the network base station for obtaining uplink grants, as the pre-scheduling request has already been sent to reserve the RF resource in advance. The tune-away event may be periodic in some examples. In other examples, the tune-away event may not be periodic, but may be scheduled in advance such that the network base station associated with the first SIM may have knowledge (e.g., the timing) of such tune-away event before the tune-away event occurs. The uplink grants may be over a physical uplink shared channel (PUSCH).

In some examples, the pre-scheduling in the manner described herein may be implemented for a network base station that has knowledge of the tune-away events of the wireless communication device 200. For example, the network base station may receive information related to the tune-away events in a manner described with respect to FIGS. 5-7. The network base station may store such information in a memory or database of or operatively coupled to the network base station. As a result, in the event that the network base station does not have knowledge of the tune-away events for the wireless communication device 200, the pre-scheduling capabilities with respect to the wireless communication device 200 and the network base station may be disabled as a response. The network base station may no longer have knowledge of (or otherwise may delete) the tune-away events of the wireless communication device 200 in response to the wireless communication device 200 de-registering a registered periodic tune-away scheme with the network base station, in response to determining that the registered periodic tune-away scheme has expired, in response the network base station determining that the registered periodic tune-away scheme is no longer applicable, or the like.

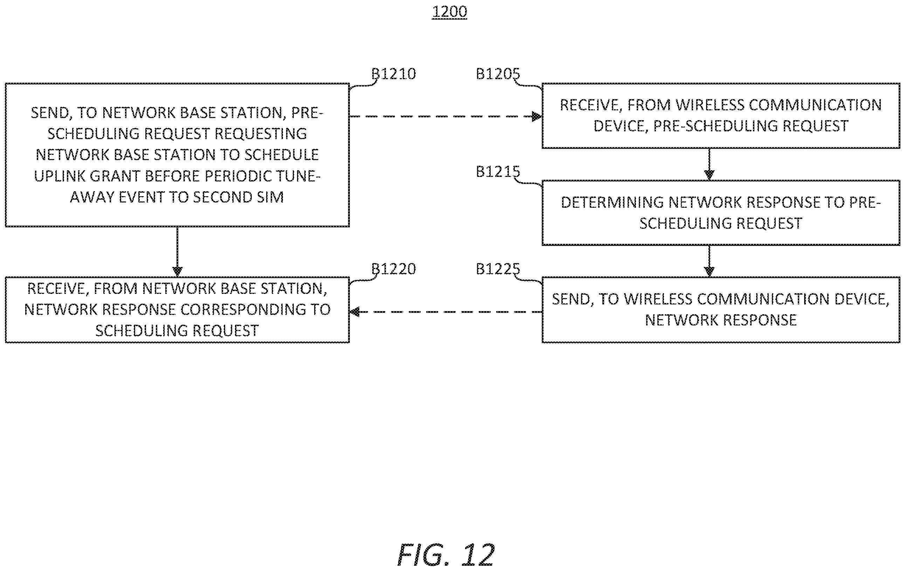

FIG. 12 is a process flow diagram illustrating an example of a method 1200 for pre-scheduling uplink grants according to various examples. Referring to FIGS. 1, 2, and 12, in some examples, the blocks on the left-hand side of FIG. 12 (i.e., the block numbers ending with "0") can be performed by the wireless communication device 200, while the blocks on the right-hand side of FIG. 12 (i.e., the block numbers ending with "5") can be performed by a network base station associated with a first SIM (SIM-1 204a) such as, but not limited to, the first base station 130. The broken arrows in FIG. 12 correspond to flow of data at each block of the method 1200. Thus, broken arrows extending from left to right in FIG. 12 can represent data that is transmitted from the wireless communication device 200 to the first base station 130. Similarly, broken arrows extending from right to left in FIG. 12 can represent data that is transmitted from the first base station 130 to the wireless communication device 200.

The wireless communication device 200 may be in a connected mode. The wireless communication device 200 may be in a MSMS (e.g., DSDS) mode. The wireless communication device 200 may have, with the network base station, a pre-existing MSMS context indicating that the wireless communication device 200 is a MSMS device. The network base station may have tune-away (e.g., periodic tune-away) registration enabled as a part of the MSMS context. Such registration may be executed over the MAC control elements in the manner described.

From the device-side, at block B1210, the module 230 and/or the general purpose processor 206 may configure the RF resource 218 to send, to the network base station, a pre-scheduling request requesting the network base station to schedule at least one uplink grant before a periodic tune-away event to the second SIM in some examples. The pre-scheduling request may request the PUSCH uplink grants. The pre-scheduling request may include a timing advance and a requested uplink grant size. In some examples, the timing advance may be an expected timing assignment that is before a tune-away start time (e.g., the tune-away start time 520) of the periodic tune-away event in which the RF resource 218 may be tuned to the second SIM. In other examples, the timing advance may be a time interval (e.g., 5 ms, 10 ms, 20 ms, or the like) before the tune-away start time. Given that the network base station has knowledge of the timing (e.g., the tune-away start time) of the tune-away event, the network base station may set the expected timing assignment as the time interval prior to the tune-away start time. The pre-scheduling request may be sent by the wireless communication device 200 before the tune-away start time.

At block B1220, the module 230 and/or the general purpose processor 206 may configure the RF resource 218 to receive, from the network base station, a network response corresponding to the scheduling request. The network response may include an acknowledgement message indicating that the pre-scheduling request was received by the network base station, a decision as to whether the pre-scheduling request is allowed or denied, or the like.

From the network-side (corresponding to the first mobile network 102), at block B1205, the network base station (e.g., the first base station 130) may receive, from the wireless communication device 200, the pre-scheduling request via the at least one antenna group. At block B1215, the processor of the network base station may determine the network response to the pre-scheduling request. For instance, the network base station may determine whether at least one uplink grant with the specified uplink grant size and timing advance can be granted to the wireless communication device 200. Determining the network response may include determining the acknowledgement message in response to receiving the pre-scheduling request. At block B1225, the processor of the network base station may configure the at least one antenna group to send, to the wireless communication device 200, the network response determined at block B1215.

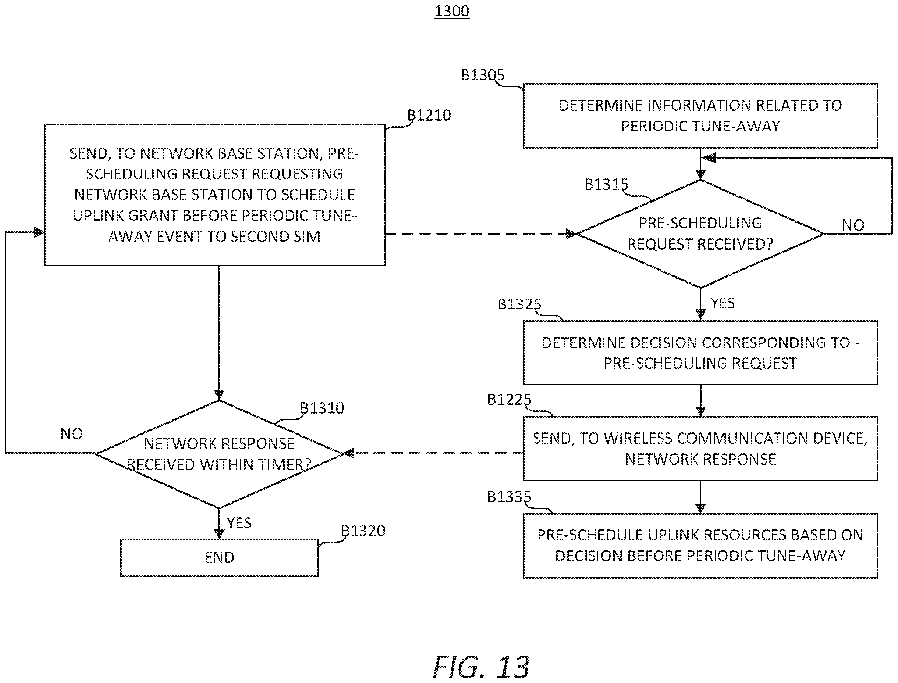

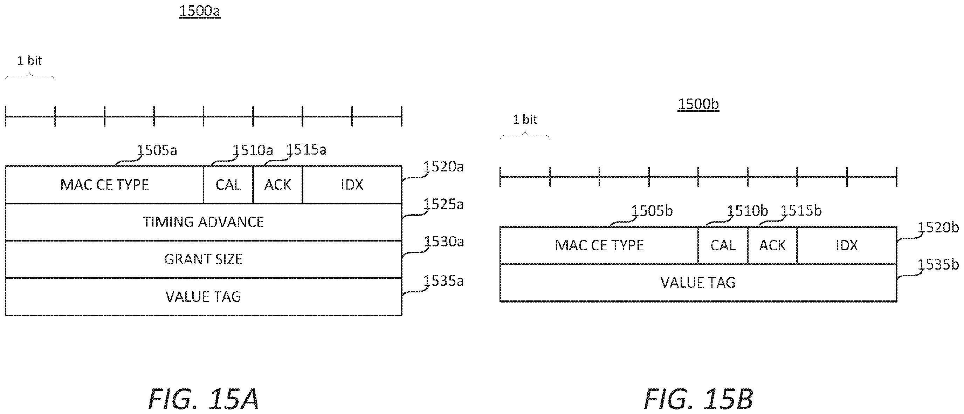

FIG. 13 is a process flow diagram illustrating an example of a method 1300 for pre-scheduling uplink grants according to various examples. FIG. 15A is a block diagram illustrating an example of a control element 1500a associated with a pre-scheduling request according to various examples. Referring to FIGS. 1, 2, 12, 13, and 15A, the method 1300 may be a particular implementation of the method 1200 in some examples. The blocks on the left-hand side of FIG. 13 (i.e., the block numbers ending with "0") can be performed by the wireless communication device 200, while the blocks on the right-hand side of FIG. 13 (i.e., the block numbers ending with "5") can be performed by a network base station associated with a first SIM (SIM-1 204a) such as, but not limited to, the first base station 130. The broken arrows in FIG. 13 correspond to flow of data at each block of the method 1300. Thus, broken arrows extending from left to right in FIG. 13 can represent data that is transmitted from the wireless communication device 200 to the first base station 130. Similarly, broken arrows extending from right to left in FIG. 13 can represent data that is transmitted from the first base station 130 to the wireless communication device 200.

From the device-side, at block B1210, the module 230 and/or the general purpose processor 206 may configure the RF resource 218 to send, to the network base station, the pre-scheduling request requesting the network base station to schedule at least one uplink grant before a periodic tune-away event to the second SIM in the manner described. In some examples, the pre-scheduling request may be embodied in a MAC control element such as, but not limited to, the control element 1500a.

In the non-limiting example shown, the control element 1500a may include, in a first octet, one or more of a MAC CE TYPE 1505a, CAL 1510a, ACK 1515a, or IDX 1520a. The MAC CE TYPE 1505a may be any suitable indicator identifying that the control element 1500a is associated with pre-scheduling (pre-scheduling type of control elements). The CAL 1510a may be any suitable indicator (e.g., "0") identifying that the control element 1500a is a pre-scheduling request. ACK 1515a may be any suitable indicator (e.g., "1") representing that an acknowledgement message is solicited from the network base station upon successful reception and decoding of the control element 1500a. IDX 1520a may be any suitable indicator identifying the RAT of the first cellular connection 132.

The control element 1500a may include, in a second octet, a timing advance 1525a which may be any suitable indicator identifying the requested timing advance. The control element 1500a may include, in a third octet, a grant size 1530a which may be any suitable indicator identifying the requested grant size. The control element 1500a may include, in a fourth octet, a value tag 1535a which may be any suitable value that uniquely identifies the control element 1500a from among other control elements. Though the control element 1500a is shown to be 4 bytes and include various parts described herein, other examples may include other configurations and sizes for the pre-scheduling request.

At block B1310, the module 230 and/or the general purpose processor 206 may determine whether a network response (including an acknowledgement message and decision) has been received within a timer. For instance, in response to sending the pre-scheduling request (e.g., the control element 1500a) at block B1210, the module 230 and/or the general purpose processor 206 may initiate the timer having a length of 5 ms, 10 ms, 20 ms, 50 ms, 100 ms, 300 ms, 2-100 ms, 100-400 ms, or the like. The network response may be received in a manner such as, but not limited to, described with respect to block B1220. In response to determining that a network response has not been received within the timer (B1310:NO), the module 230 and/or the general purpose processor 206 may configure the RF resource 218 to resend the pre-scheduling request at block B1210. After a number of retransmissions, the wireless communication device 200 may cease retransmitting the pre-scheduling request. The number of retransmissions may be predetermined or determined dynamically based on network conditions over the first cellular connection 132. On the other hand, in response to determining that a network response has been received within the timer (B1310:YES), the method 1300 on the device-side ends at block B1320. In some examples, in response to receiving the network response including the decision, the method 1300 may end at block B1320. That is, in response to receiving the network response including the acknowledgement message but not the decision, the method 1300 may return to block B1210.

From the network-side, at block B1305, the network base station (e.g., the first base station 130) may determine information related to the periodic tune-away in the manner described herein. The information related to the periodic tune-away may include at least the tune-away start time. In alternative or additional examples, the information may include periodicity of the periodic tune-away. At block B1315, the processor of the network base station may determine whether the pre-scheduling request (e.g., the control element 1500a) has been received, via the at least one antenna group, from the wireless communication device 200. The pre-scheduling request may be received in a manner such as, but not limited to, block B1205. In response to determining that the pre-scheduling request has not been received (B1315:NO), the method 1300 returns to block B1315.

On the other hand, in response to determining that the pre-scheduling request has been received (B1315:YES), the processor of the network base station may determine a decision (to allow or deny) corresponding to the pre-scheduling request, at block B1325. For instance, based on the content of the timing advance 1525a and grant size 1530a, the processor of the network base station may determine whether uplink resources are available for one or more uplink grants defined by the timing advance 1525a and grant size 1530a.

At block B1225, the processor of the network base station may configure the at least one antenna group to send, to the wireless communication device 200, the network response in the manner described. The network response may include the acknowledgement message and the decision to allow or deny the pre-scheduling request.

At block B1335, the processor of the network base station may pre-schedule uplink resources based on the decision before the periodic tune-away. That is, the network base station may reserve the allocated uplink resources in advance, before the allocated uplink resources can be used by the wireless communication device 200. The allocated uplink resources may have associated time frame(s) or slot(s) before the start time of the tune-away, for example, within a period of the periodic tune-away. In some examples, the pre-scheduled uplink resources may be periodic in nature, having the same periodicity (or multiples thereof) as the tune-away event based on which the pre-scheduled uplink resources are determined.

In some examples, frequent update of the information (e.g., the timing, including the tune-away start time, and/or the like) of the periodic tune-away event may be a condition or trigger for the methods 1200 and 1300. In some examples, in response to determining that the information of the periodic tune-away event is updated as frequently as or more frequently than once every first number of periods, the module 230 and/or the general purpose processor 206 of the wireless communication device 200 may initiate block B1210. The first number of periods may be 5, 10, 20, 5-20, or the like.

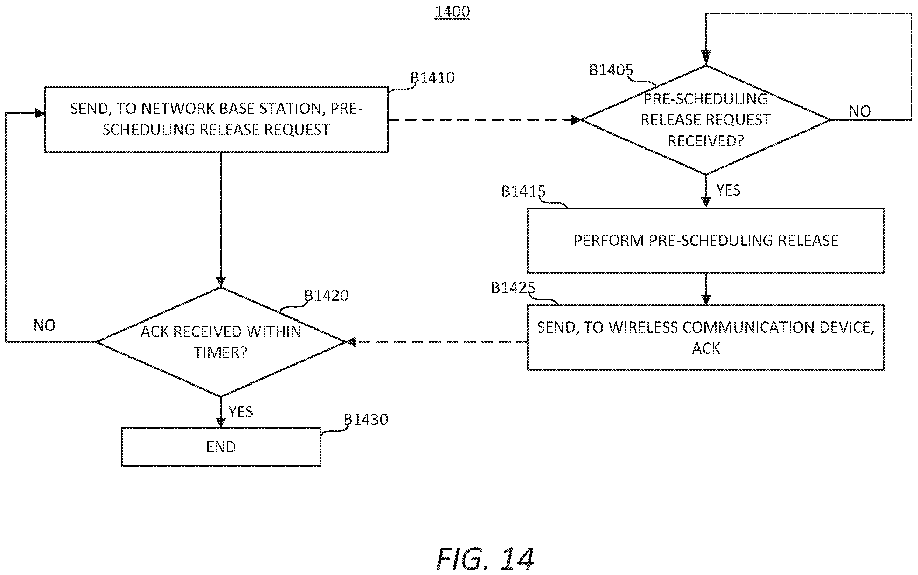

FIG. 14 is a process flow diagram illustrating an example of a method 1400 for pre-scheduling release according to various examples. FIG. 15B is a block diagram illustrating an example of a control element 1500b associated with the method 1400 (Fig. 14) according to various examples. Referring to FIGS. 1, 2, 12-14, 15A, and 15B, the blocks on the left-hand side of FIG. 14 (i.e., the block numbers ending with "0") can be performed by the wireless communication device 200, while the blocks on the right-hand side of FIG. 14 (i.e., the block numbers ending with "5") can be performed by a network base station associated with a first SIM (SIM-1 204a) such as, but not limited to, the first base station 130. The broken arrows in FIG. 14 correspond to flow of data at each block of the method 1400. Thus, broken arrows extending from left to right in FIG. 14 can represent data that is transmitted from the wireless communication device 200 to the first base station 130. Similarly, broken arrows extending from right to left in FIG. 14 can represent data that is transmitted from the first base station 130 to the wireless communication device 200.

The wireless communication device 200 may be in the connected mode. The wireless communication device 200 may be in the MSMS (e.g., DSDS) mode. The wireless communication device 200 may have, with the network base station, a pre-existing MSMS context indicating that the wireless communication device 200 is a MSMS device. The network base station may have tune-away (e.g., periodic tune-away) registration enabled. Such registration may be executed over the MAC control element in the manner described.

From the device-side, at block B1410, the module 230 and/or the general purpose processor 206 may configure the RF resource 218 to send, to the network base station, a pre-scheduling release request requesting the network base station to release a pre-scheduled uplink grant scheme. For example, as a result of the methods 1200 and 1300, pre-scheduled uplink resources having the timing advance and grant size specified in the pre-scheduling request may be allocated for the wireless communication device 200. The pre-scheduled uplink resources may have a same or multiple periodicity as that of the periodic tune-away event. For any suitable reason (e.g., halting of uplink activities), the module 230 and/or the general purpose processor 206 may signal that the periodic pre-scheduled uplink resources are no longer needed by sending the pre-scheduling release request at block B1410.

In some examples, the pre-scheduling request may be embodied in a MAC control element such as, but not limited to, the control element 1500b. In the non-limiting example shown, the control element 1500b may include, in a first octet, one or more of a MAC CE TYPE 1505b, CAL 1510b, ACK 1515b, IDX 1520b. The MAC CE TYPE 1505b may be any suitable indicator identifying that the control element 1500b is associated with pre-scheduling. MAC CE TYPE 1505b may be the same as the MAC CE TYPE 1505a. The CAL 1510b may be any suitable indicator (e.g., "1") identifying that the control element 1500b is a pre-scheduling request release message. ACK 1515b may be any suitable indicator (e.g., "1") representing that an acknowledgement message is solicited from the network base station upon reception of the control element 1500b. IDX 1520b may be any suitable indicator identifying the RAT of the first cellular connection 132. The control element 1500a may include, in a second octet, a value tag 1535b which may be any suitable value that uniquely identifies the control element 1500a from among other control elements. Though the control element 1500b is shown to be 2 bytes and include various parts described herein, one or ordinary skill in the art can appreciate other configurations and sizes for the pre-scheduling request.

At block B1420, the module 230 and/or the general purpose processor 206 may determine whether an acknowledgement message has been received from the network base station within a timer. For instance, in response to sending the pre-scheduling release request (e.g., the control element 1500b) at block B1410, the module 230 and/or the general purpose processor 206 may initiate the timer having a length such as, but not limited to, 5 ms, 10 ms, 20 ms, 50 ms, 100 ms, 300 ms, 2-100 ms, 100-400 ms, or the like. In response to determining that an acknowledgement message has not been received within the timer (B1420:NO), the module 230 and/or the general purpose processor 206 may configure the RF resource 218 to resend the pre-scheduling release request at block B1410. After a number of retransmissions, the wireless communication device 200 may cease retransmitting the pre-scheduling release request. The number of retransmissions may be predetermined or dynamically set based on network conditions over the first cellular connection 132. On the other hand, in response to determining that an acknowledgement message has been received within the timer (B1420:YES), the method 1400 on the device-side ends at block B1430.

From the network-side, at block B1405, the processor of the network base station may determine whether the pre-scheduling release request (e.g., the control element 1500b) has been received from the wireless communication device 200 via the at least one antenna group. In response to determining that the pre-scheduling release request has not been received (B1405:NO), the method 1400 returns to block B1405.

On the other hand, in response to determining that the pre-scheduling request has been received (B1405:YES), the processor of the network base station may perform a pre-scheduling release, at block B1415. That is, resources allocated as a result of methods 1200 and/or 1300 for the wireless communication device 200 may no longer be reserved for the wireless communication device 200 pursuant to the release at block B1415. At block B1425, the processor of the network base station may configure the at least one antenna group to send, to the wireless communication device 200, the acknowledgement message. In some examples, the acknowledgement message may be sent in response to receiving the pre-scheduling release request at block B1405. In other examples, the acknowledgement message may be sent in response to completing the pre-scheduling release at block B1415. In some examples, the blocks B1415 and B1425 may be executed in any suitable order.

Referring again to the FIGS. generally, in some scenarios, the wireless communication device 200 may configure the RF resource 218 to tune away to the second SIM (SIM-2 204b) for a period of time during which the network base station (e.g., the first base station 130) may deem the wireless communication device 200 to be non-responsive, thus releasing the RRC connection (deleting the RRC context information and designating the wireless communication device 200 to be in an idle mode) and/or releasing MSMS status (deleting MSMS context information relative to, for example, the tune-away information). Some examples described herein seek to suspend or reserve the RRC context and/or the MSMS context for a period of time in response to the tune-away event instead of deleting, thus conserving power, time, and signaling overhead consumed for a RACH process from the perspective of the wireless communication device 200 while improving resource utilization efficiency in network base station as well.

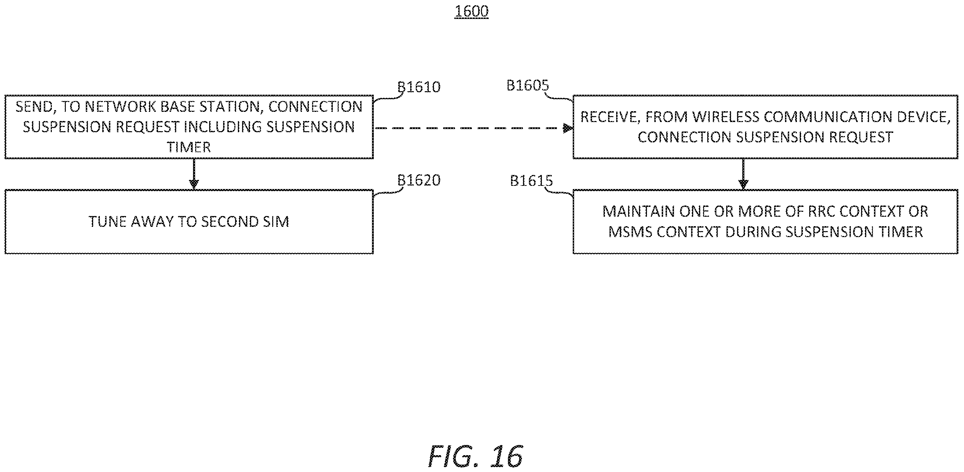

FIG. 16 is a process flow diagram illustrating an example of a method 1600 for suspending a context associated with the wireless communication device 200 (FIG. 2) according to various examples. Referring to FIGS. 1, 2, and 16, in some examples, the blocks on the left-hand side of FIG. 16 (i.e., the block numbers ending with "0") can be performed by the wireless communication device 200, while the blocks on the right-hand side of FIG. 16 (i.e., the block numbers ending with "5") can be performed by a network base station associated with a first SIM (SIM-1 204a) such as, but not limited to, the first base station 130. The broken arrows in FIG. 16 correspond to flow of data at each block of the method 1600. Thus, broken arrows extending from left to right in FIG. 16 can represent data that is transmitted from the wireless communication device 200 to the first base station 130. Similarly, broken arrows extending from right to left in FIG. 16 can represent data that is transmitted from the first base station 130 to the wireless communication device 200.

The wireless communication device 200 may be in a MSMS (e.g., DSDS) mode. The wireless communication device 200 may have, with the network base station, a pre-existing MSMS context indicating that the wireless communication device 200 is a MSMS device. The MSMS context may refer to MSMS-related information about the wireless communication device 200, including, but not limited to, the tune-away information (e.g., the tune-away type, tune-away start time, tune-away duration, or the like).

From the device-side, at block B1610, the module 230 and/or the general purpose processor 206 may configure the RF resource 218 to send, to the network base station, a connection suspension request including a suspension timer. In some examples, the connection suspension request may be sent in response to determining an imminent tune-away event to the second SIM. Illustrating with a non-limiting example, in response to receiving a page indicating that a call over the second SIM is forth coming, the connection suspension request may be sent. Illustrating with another non-limiting example, in response to determining a periodic or scheduled tune-away event to the second SIM that has been scheduled in advance, the connection suspension request may be sent at the same time that the tune-away event is to occur.

In some examples, a length of the suspension timer may equal an expected time interval in which the tune-away event is to be completed. Illustrating with a non-limiting example, in response to determining that the tune-away event is page reception, the length of the suspension timer may equal to an interval (e.g., 2 ms, 5 ms, 10 ms, 20 ms, 50 ms, 1-20 ms, or the like) in which the page reception is expected or estimated to complete. Illustrating with another non-limiting example, in response to determining that the tune-away event is a cell camp-on event, the length of the suspension timer may equal to an interval (e.g., 200 ms, 500 ms, 1 s, 2 s, 100 ms - 2s, or the like) in which the camp on is expected or estimated to complete. Illustrating with yet another non-limiting example, in response to determining that the tune-away event is an incoming voice call, the length of the suspension timer may equal to an estimated time interval (e.g., 30 s, 1 min, 2 mins, 5 min, 3 s - 6 min, or the like) in which the voice call may be completed.

At block B1620, the module 230 and/or the general purpose processor 206 may configure the RF resource 218 to tune away from the first SIM to the second SIM, for the tune-away event.

From the network-side (corresponding to the first mobile network 102), at block B1605, the network base station (e.g., the first base station 130) may receive, from the wireless communication device 200, the connection suspension request via the at least one antenna group.

At block B1615, the processor of the network base station may maintain one or more of the RRC context or MSMS during the suspension timer. In some examples, in response to receiving the connection suspension request, the processor of the network base station may initiate the suspension timer having a length specified in the connection suspension request received.

Before the suspension timer expires, the network base station may suspend the wireless communication device 200 instead of releasing the RRC connection and/or releasing the MSMS status of the wireless communication device 200. Suspending the wireless communication device 200 refers to indicating that the wireless communication device 200 is out-of-service (OOS) or unavailable temporarily for at least the suspension timer. However, suspending the wireless communication device 200 may include maintaining the RRC context of the wireless communication device 200 to be in the RRC connected mode. In addition or alternatively, suspending the wireless communication device 200 may include maintaining the MSMS context of the wireless communication device 200 by saving (not deleting) the information related to the tune-away events.

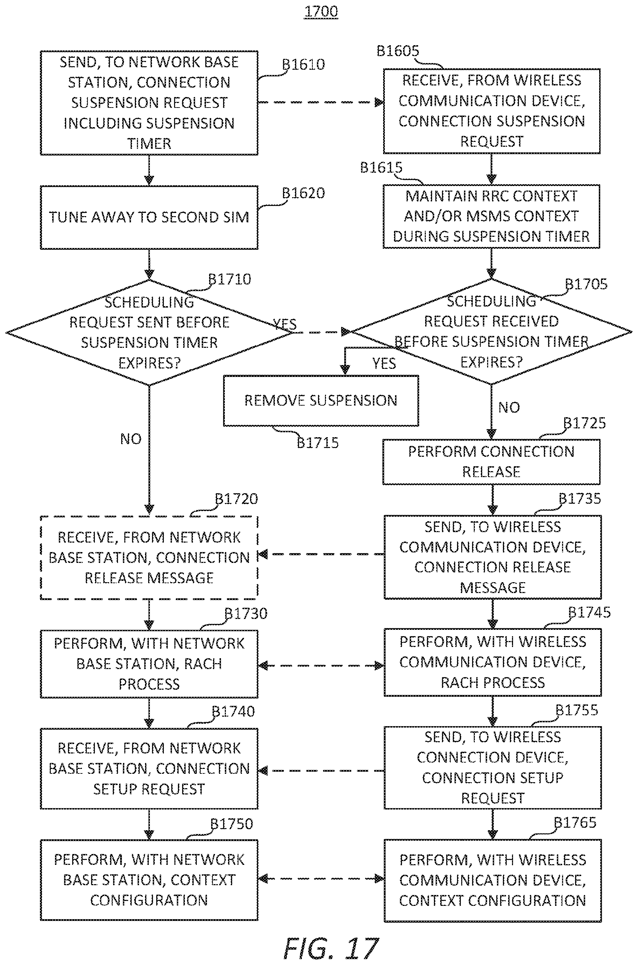

FIG. 17 is a process flow diagram illustrating an example of a method 1700 for suspending a context associated with the wireless communication device 200 (FIG. 2) according to various examples. Referring to FIGS. 1, 2, 16, and 17 in some examples, the blocks on the left-hand side of FIG. 17 (i.e., the block numbers ending with "0") can be performed by the wireless communication device 200, while the blocks on the right-hand side of FIG. 17 (i.e., the block numbers ending with "5") can be performed by a network base station associated with a first SIM (SIM-1 204a) such as, but not limited to, the first base station 130. The broken arrows in FIG. 17 correspond to flow of data at each block of the method 1700. Thus, broken arrows extending from left to right in FIG. 17 can represent data that is transmitted from the wireless communication device 200 to the first base station 130. Similarly, broken arrows extending from right to left in FIG. 17 can represent data that is transmitted from the first base station 130 to the wireless communication device 200. A broken line having arrows on either end can represent data that is communicated between the first base station 130 and the wireless communication device 200.

Specifically, the method 1700 may be a particular implementation of the method 1600, and may include additional blocks. For instance, at the device-side, the module 230 and/or the general purpose processor 206 may determine whether a scheduling request has been sent before the suspension timer expires, at block B1710. In some examples, in response to tuning away to the second SIM at block B1620, the module 230 and/or the general purpose processor 206 may start the suspension timer. The module 230 and/or the general purpose processor 206 may tune the RF resource 218 from the second SIM back to the first SIM after the tune-away at block B1620. In response to determining that the tune-away event ends before the suspension timer expires, the module 230 and/or the general purpose processor 206 may configure the RF resource 218 to send a scheduling request to the network base station (B1710:YES). The scheduling request may be based on actual need, or the scheduling request (or other suitable signals) may be a probe used to notify the network base station that the tune-away event ended.

In response to determining that the tune-away event is still on-going when the suspension timer expires, a scheduling request cannot be sent before the suspension timer expires (B1710:NO). In response to determining that a scheduling request cannot be sent before the suspension timer expires (B1710:NO), the module 230 and/or the general purpose processor 206 may configure the RF resource 218 to receive, from the network base station, a connection release message at block B1720. The connection release message (e.g., a RRC connection release message) may indicate that one or more of the RRC context or MSMS context have been deleted. In some examples, the connection release message or a retransmission thereof may be received given that the RF resource 218 is tuned back to the first SIM in time. In such examples, a connection release with respect to the wireless communication device 200 may be performed based on the connection release message.

In other examples, the connection release message or any retransmissions thereof may not be received given that the RF resource is still tuned away to the second SIM when the connection release message or any retransmissions thereof arrives at the wireless communication device 200. In such examples, the block B1720 may be optional, given that the determining that a scheduling request cannot be sent before the suspension timer expires (B1710:NO) may be sufficient evidence that the network base station will perform a connection release. Thus, a local connection release with respect to the wireless communication device 200 may be performed without receiving the connection release message from the network base station at block B1720.

At block B1730, the module 230 and/or the general purpose processor 206 may configure the RF resource 218 to perform, with the network base station, a RACH process. At block B1740, the module 230 and/or the general purpose processor 206 may configure the RF resource 218 to receive, from the network base station, a connection setup request. At block B1750, the module 230 and/or the general purpose processor 206 may configure the RF resource 218 to perform, with the network base station, a context configuration. The context configuration may include configuring the RRC context based on the connection setup request, configuring the MSMS context in the manner described, a combination thereof, and/or the like.

From the network side, at block B1705, the network base station (e.g., the first base station 130) may determine whether a scheduling request has been received before the suspension timer expires. In response to receiving a scheduling request before the suspension timer expires, the network base station may remove the suspension at block B1715. That is, the network base station may designate the wireless communication device 200 to be available and no longer OOS. The RRC context and the DSDS context maintained at B1615 during the suspension timer can be applied at block B1715 and after. In the event that the scheduling request received is an actual request for uplink grants and not a probe, the network base station may determine whether to allow or deny allocation of uplink resources corresponding to the scheduling request.

On the other hand, in response to determining that a scheduling request has not been received before the suspension timer expires, the network base station may perform a connection release with respect to the wireless communication device 200 at block B1725. That is, parameters and other stored data with respect to the RRC context and the MSMS context may be deleted or otherwise removed. The network base station may designate the wireless communication device 200 to be in a RRC-idle mode. At block B1735, the network base station may send, to the wireless communication device, a connection release message. In some instances, the network base station may send the connection release message (and retransmissions thereof) in a best-effort type scheme, given that the network base station may lack knowledge as to whether the RF resource 218 of the wireless communication device 200 is still tuned to the second SIM and thus cannot receive via the first SIM. Acknowledgements or other responses from the wireless communication device 200 may not be needed for the connection release message.

At block B1745, the network base station may perform, with the wireless communication device 200, the RACH process. At block B1755, the network base station may send, to the wireless communication device 200, a connection setup request. At block B1765, the network base station may perform, with the wireless communication device 200, the context configuration.

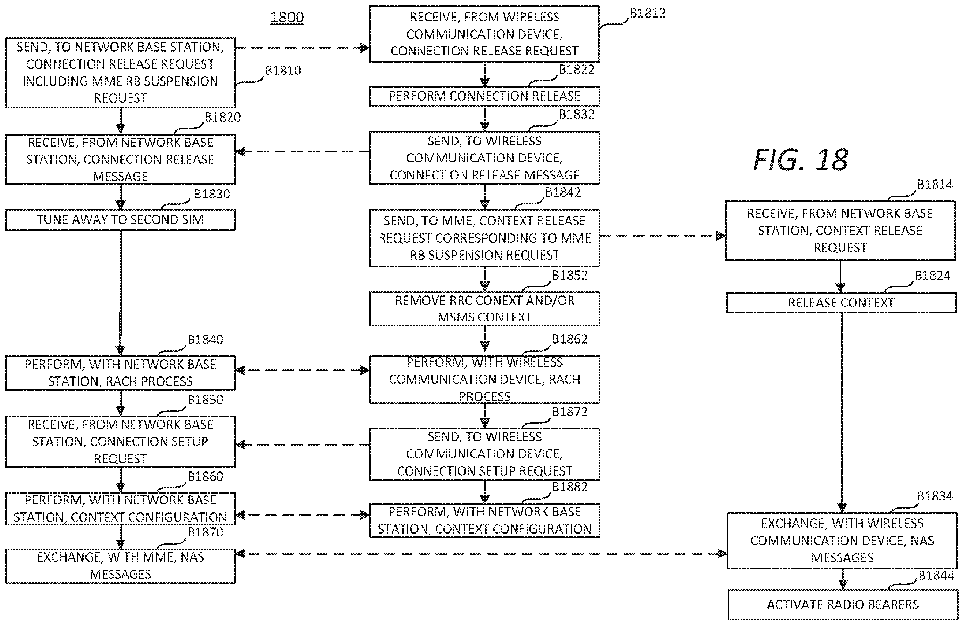

FIG. 18 is a process flow diagram illustrating an example of a method 1800 for connection release with mobility management entity (MME) radio bearer suspension according to various examples. Referring to FIGS. 1, 2, and 18, the blocks in the left-hand column of FIG. 18 (i.e., the block numbers ending with "0") can be performed by the wireless communication device 200. The blocks in the middle column of FIG. 18 (i.e., the block numbers ending with "2") can be performed by a network base station associated with a first SIM (SIM-1 204a) such as, but not limited to, the first base station 130. The blocks in the right-hand column of FIG. 18 (i.e., the block numbers ending with "4") can be performed by the MME. The broken arrows in FIG. 18 correspond to flow of data at each block of the method 1800. A broken line having arrows on either end can represent data that is communicated between the associated entities.

The MME may be a control node that processes signaling between the wireless communication device 200 and an evolved packet core (EPC). The EPC may include, but not limited to, the MME, serving gateway, packet data network (PDN) gateway, or the like. Generally, the MME can provide radio bearer and connection management. With respect to radio bearer management, the MME may establish and release one or more radio bears with the wireless communication device 200. With respect to connection management, the MME may establish and release secured connection between the wireless communication device 200 and the first mobile network 102. The protocol for communication between the wireless communication device 200 and the MME may be a non-access stratum (NAS) protocol. When the wireless communication 200 attaches to the first mobile network 102, a UE context that includes an identifier and subscription information may be determined for the wireless communication device 200.

From the device-side, at block B1810, the module 230 and/or the general purpose processor 206 may configure the RF resource 218 to send, to the network base station, a connection release request including a MME radio bearer suspension request. The connection release request may be a RRC connection release request. In some examples, the MME radio bearer suspension request can indicate to the network base station that a nature of the tune-away event may warrant the MME to release the UE context (e.g., to release or otherwise suspend the radio bears established).

The connection release request may be sent to the network base station in response to determining an incoming tune-away event to the second SIM (SIM-2 204b). Illustrating with a non-limiting example, the connection release request may be sent in response to determining a periodic tune-away event (e.g., scheduled page reception) or another suitable type of scheduled tune-away event to the second SIM. Illustrating with another non-limiting example, the connection release request may be sent in response to determining an incoming voice call over the second SIM, incoming data usage over the second SIM, or another suitable type of unscheduled tune-away event over the second SIM.

In some examples, in response to determining that an expected tune-away interval for the tune-away event is above a threshold, the connection release request may be sent. The threshold may be, but not limited to, 500 ms, 1 s, 5 s, 20 s, 1 min, 5 mins, or the like. In some examples, in response to determining that the tune-away event is a certain type of tune-away event, the connection release request may be sent. Illustrating with a non-limiting example, in response to determining that the tune-away event is an incoming voice call, the connection release request may be sent. Illustrating with another non-limiting example, in response to determining that the tune-away event is a periodic page reception, the connection release request may not be sent.

At block B1820, the module 230 and/or the general purpose processor 206 may configure the RF resource 218 to receive, from the network base station, a connection release message. In some examples, the connection release message may be a RRC connection release message indicating that the network base station designates the wireless communication device 200 to be in the idle mode. At block B1830, the module 230 and/or the general purpose processor 206 may configure the RF resource 218 to tune-away to the second SIM.

At block B1840, the module 230 and/or the general purpose processor 206 may configure the RF resource 218 to perform, with the network base station, a RACH process. At block B1850, the module 230 and/or the general purpose processor 206 may configure the RF resource 218 to receive, from the network base station, a connection setup request. At block B1860, the module 230 and/or the general purpose processor 206 may configure the RF resource 218 to perform, with the network base station, a context configuration. The context configuration may include configuring the RRC context based on the connection setup request, configuring the MSMS context in the manner described, a combination thereof, and/or the like. At block B1870, the module 230 and/or the general purpose processor 206 may configure the RF resource 218 to exchange NAS messages with the MME for setting up the radio bearers.

From the network side, at block B1812, the network base station (e.g., the first base station 130) may receive, from the wireless communication device 200, the connection release request. At block B1822, the processor of the network base station may perform the connection release with respect to the wireless communication device 200. At block B1832, the network base station may send the connection release message to the wireless communication device 200.

At block B1842, the network base station may send, to the MME, a context release request corresponding to the MME radio bearer suspension request. The context release request may indicate to the MME that the UE context corresponding to the wireless communication device 200 is to be released. That is, the context release request may indicate to the MME that the wireless communication device 200 is unavailable or OOS for circuit switching (CS) or packet switching (PS).

At block B1852, the network base station may remove the RRC context and/or the MSMS context in the manner described. In some examples, block B1852 may be performed in response to receiving a command from the MME instructing the network base station to remove the RRC context and/or the MSMS context. In some examples, block B1852 may be performed as a part of block B1822. In some examples, block B1852 may be performed automatically in response to sending the context release request to the MME. In some examples, the connection release (B1822) may be performed with RRC and/or MSMS context removal at block B1852.

At block B1862, the network base station may perform, with the wireless communication device 200, the RACH process. At block B1872, the network base station may send, to the wireless communication device 200, the a connection setup request. At block B1882, the network base station may perform, with the wireless communication device 200, the context configuration.

From the MME-side, at block B1814, the MME may receive, from the network base station, the context release request. At block B1824, the MME may release the context of the wireless communication device 200. Releasing the context of the wireless communication device 200 may include marking or otherwise flagging the wireless communication device 200 to be unavailable or OOS for CS and/or PS. In some examples, the context and the information related to established radio bearers may be retained after the context is released. In other examples, the context and the information related to the established radio bearers may be deleted.

At block B1834, the MME may exchange the NAS messages with the wireless communication device 200. At block B1844, the MME may activate the radio bearers based on the NAS messages exchanged. In some examples in which the context and the information related to established radio bearers are retained after the context is released, the radio bearers may be activated based on the NAS messages exchanged and the retained context and the information related to established radio bearers. In other examples in which the context and the information related to the established radio bearers are deleted, the radio bearers may be activated based on the NAS messages exchanged.

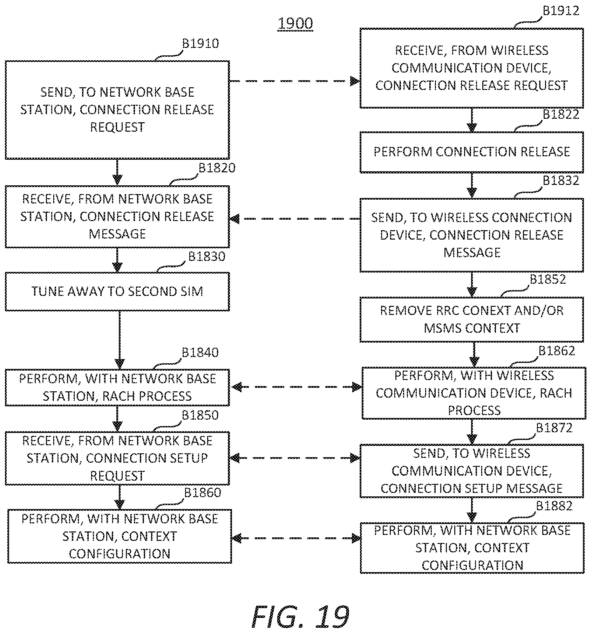

FIG. 19 is a process flow diagram illustrating an example of a method 1900 for connection release according to various examples. Referring to FIGS. 1, 2, 18, and 19, the method 1900 may be alternative to the method 1800 given that the method 1900 is not concerned with the MME radio bearer suspension. In some examples, the blocks in the left-hand column of FIG. 19 (i.e., the block numbers ending with "0") can be performed by the wireless communication device 200. The blocks in the right-hand column of FIG. 19 (i.e., the block numbers ending with "2") can be performed by the network base station. The broken arrows in FIG. 19 correspond to flow of data at each block of the method 1900. A broken line having arrows on either end can represent data that is communicated between the associated entities.

From the device-side, at block B1910, the module 230 and/or the general purpose processor 206 may configure the RF resource 218 to send, to the network base station, a connection release request. The connection release request may be a RRC connection release request. The connection release request may be sent to the network base station in response to determining an incoming tune-away event to the second SIM (SIM-2 204b) in the manner described. In some examples, in response to determining that an expected tune-away interval for the tune-away event is above a threshold, the connection release request may be sent as described. In some examples, in response to determining that the tune-away event is a certain type of tune-away event, the connection release request may be sent as described.

At block B1820, the module 230 and/or the general purpose processor 206 may configure the RF resource 218 to receive, from the network base station, a connection release message. At block B1830, the module 230 and/or the general purpose processor 206 may configure the RF resource 218 to tune-away to the second SIM. At block B1840, the module 230 and/or the general purpose processor 206 may configure the RF resource 218 to perform, with the network base station, the RACH process. At block B1850, the module 230 and/or the general purpose processor 206 may configure the RF resource 218 to receive, from the network base station, the connection setup request. At block B1860, the module 230 and/or the general purpose processor 206 may configure the RF resource 218 to perform, with the network base station, the context configuration.

From the network side, at block B1912, the network base station (e.g., the first base station 130) may receive, from the wireless communication device 200, the connection release request. At block B1822, the processor of the network base station may perform the connection release with respect to the wireless communication device 200 in the manner described. At block B1832, the network base station may send the connection release message to the wireless communication device 200. At block B1852, the network base station may remove the RRC context and/or the MSMS context in the manner described. At block B1862, the network base station may perform, with the wireless communication device 200, the RACH process. At block B1872, the network base station may send, to the wireless communication device 200, the connection setup request. At block B1882, the network base station may perform, with the wireless communication device 200, the context configuration.

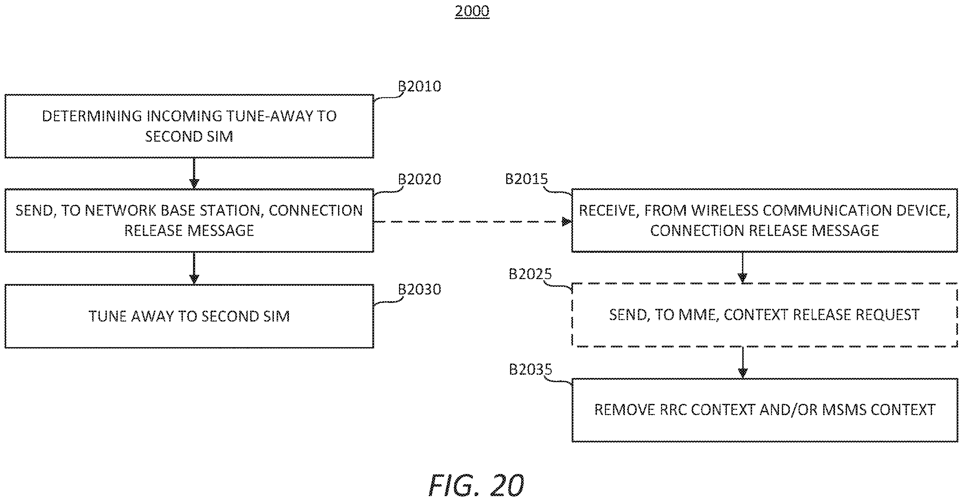

FIG. 20 is a process flow diagram illustrating an example of a method 2000 for tune-away-triggered connection release according to various examples. Referring to FIGS. 1, 2, and 18-20, the method 2000 may be a generalized method of the methods 1800 and 1900. One or more of the blocks of FIG. 20 may correspond to one or more blocks of FIGS. 18 and 19. In some examples, the blocks in the left-hand column of FIG. 20 (i.e., the block numbers ending with "0") can be performed by the wireless communication device 200. The blocks in the right-hand column of FIG. 20 (i.e., the block numbers ending with "5") can be performed by the network base station. The broken arrows in FIG. 20 correspond to flow of data at each block of the method 2000. A broken line having arrows on either end can represent data that is communicated between the associated entities.

At block B2010, the module 230 and/or the general purpose processor 206 may determine an incoming tune-away to the second SIM (SIM-2 204b). At block B2020, the module 230 and/or the general purpose processor 206 may send, to the network base station, a connection release message. In some examples, the connection release message may include the MME radio bearer suspension request (e.g., block B1810). In other examples, the connection release message may not include the MME radio bearer suspension request (e.g., block B1910). At block B2030, the module 230 and/or the general purpose processor 206 may configure the RF resource 218 to tune-away to the second SIM.

From the network side, at block B2015, the network base station (e.g., the first base station 130) may receive, from the wireless communication device 200, the connection release request. In the examples in which the connection release message includes the MME radio bearer suspension request, the network base station may send, to the MME, the context release request corresponding to the MME radio bearer suspension request. In other examples, in which the connection release message does not include the MME radio bearer suspension request, block B2025 may be omitted. At block B2035, the network base station may remove the RRC context and/or the MSMS context.

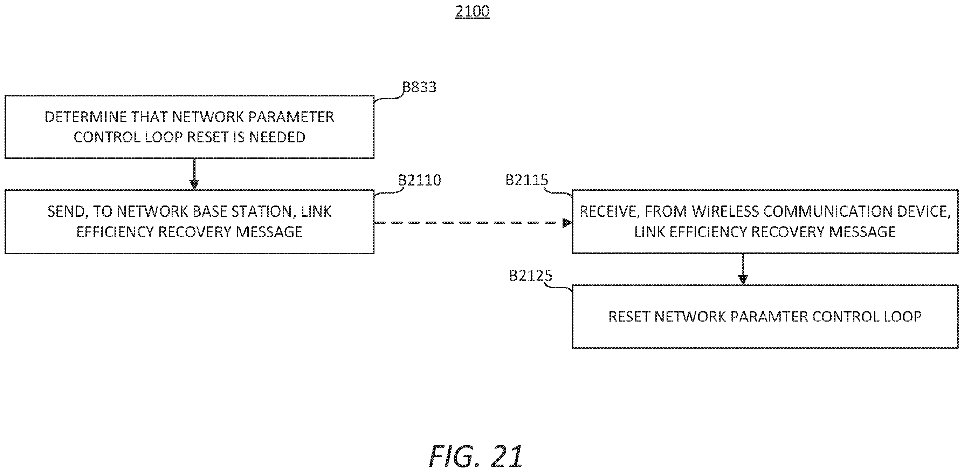

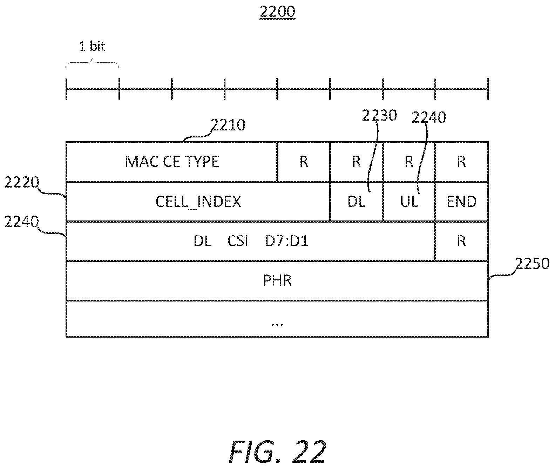

FIG. 21 is a process flow diagram illustrating an example of a method 2100 for uplink/downlink efficiency recovery according to various examples. FIG. 22 is a block diagram of an example of a control element 2200 used for the method 2100 (FIG. 21) according to various examples. Referring to FIGS. 1, 2, 8A, 8B, 21, and 22, the method 2100 may be alternative to the method 820. Specifically, in the method 2100, reports for the link efficiency recovery may be triggered by the wireless communication device 200, instead of by the network base station as shown in the method 820. The control element 2200 may be alternative to the control element 800. The blocks in the left-hand column of FIG. 21 (i.e., the block numbers ending with "0" or "3") can be performed by the wireless communication device 200. The blocks in the right-hand column of FIG. 21 (i.e., the block numbers ending with "5") can be performed by the network base station. The broken arrows in FIG. 20 correspond to flow of data at each block of the method 2000.
The wireless communication device 200 may be in the connected mode. The wireless communication device 200 may be in the MSMS (e.g., DSDS) mode. The wireless communication device 200 may have, with the network base station, a pre-existing MSMS context indicating that the wireless communication device 200 is a MSMS device. The network base station may have tune-away (e.g., periodic tune-away) registration enabled. Such registration may be executed over the MAC control element in the manner described. The network base station may have link efficiency recovery MAC control element processing enabled. That is, the network base station may be configured with the protocol associated with the link efficiency recovery MAC control element (e.g., the control element 2200).
At block B833, the module 230 and/or the general purpose processor 206 of the wireless communication device 200 may determine that a network parameter control reset is needed in the manner described. At block B2110, the module 230 and/or the general purpose processor 206 may configure the RF resource to send, to the network base station, a link efficiency recovery message. In some examples, the link efficiency recovery message may be sent in a control element (such as, but not limited to, the control element 2200) or uplink control information (UCI). In some examples, the link efficiency recovery message may include CQI or RI information in addition to or as a part of the control element.

In the non-limiting example shown, the control element 2200 may include, in a first octet, a MAC CE TYPE 2210. The MAC CE TYPE 2210 may be any suitable indicator identifying that the control element 2200 is associated with downlink and/or uplink efficiency recovery. The control element 2200 may include, in a second octet, a CELL INDEX 2220, downlink identifier 2230, uplink identifier 2240. The CELL_INDEX 2220 may be any suitable indicator identifying a cell (e.g., a serving cell (e.g., the first serving cell 150), neighbor cell, secondary cell, a combination thereof, and/or the like) regarding which the information contained in the control element 2200 may be. The downlink identifier 2230 may be any suitable indicator (e.g., "1") indicating that the control element 2200 is associated with downlink link efficiency recovery. The uplink identifier 2240 may be any suitable indicator (e.g., "1") indicating that the control element 2200 is associated with uplink link efficiency recovery. When the downlink identifier 2230 indicates that the control element 2200 is associated with downlink link efficiency recovery, the uplink identifier 2240 may indicate that the control element 2200 cannot be associated with uplink efficiency recovery.

The control element 2200 may include, in a third octet, CSI information 2240. The CSI information 2240 may be used for downlink link efficiency recovery (e.g., when the downlink identifier 2230 is "1"). The control element 2200 may include, in a fourth octet, a power headroom report (PHR) 2250 representing an amount of transmission power remaining from total power available after power is being used for current transmissions for uplink. In some embodiments, a control element (such as, but not limited to, the control element 2200) additionally or alternatively may include one or more of a path loss indicator representing a value for path loss for uplink link efficiency recovery, F_i representing a detected power control function value for uplink link efficiency recovery, G_i representing a detected power control function value for uplink link efficiency recovery, or the like.

In some examples, the control element 2200 may include blocks having one or more of the second, third, or fourth octet for each additional cell identified by another CELL_INDEX. Though the control element 2200 is shown to be 4 bytes (for one cell) and include various parts described herein, one or ordinary skill in the art can appreciate other configurations and sizes for the pre-scheduling request. The control element 2200 may have a size of 1+3^{∗}n, where n is a number of cells having its information included in the control element 2200.

From the network-side, at block B2115, the network base station may receive, from the wireless communication device 200, the link efficiency recovery message. At block B2125, the network base station may reset at least one network parameter control loop based on the link efficiency recovery message. For instance, in the event that the link efficiency recovery message includes downlink information (e.g., CQI, RI, or the like) with respect to a cell or secondary cell, the network base station may apply the downlink information and reset a downlink rate control loop bias per downlink carrier or RAT basis based on the link efficiency recovery message. In another example, in the event that the link efficiency recovery message includes uplink information (the PHR 2250, path loss indicator, detected power control function values, or the like) the network base station may re-initialize uplink SINR estimate and schedule uplink MCS as that of Msg3 scheduling. The network base station may reset the uplink rate control loop bias per uplink carrier or RAT basis.

The various examples illustrated and described are provided merely as examples to illustrate various features of the claims. However, features shown and described with respect to any given example are not necessarily limited to the associated example and may be used or combined with other examples that are shown and described. Further, the claims are not intended to be limited by any one example.

The foregoing method descriptions and the process flow diagrams are provided merely as illustrative examples and are not intended to require or imply that the blocks of various examples must be performed in the order presented. As will be appreciated by one of skill in the art the order of blocks in the foregoing examples may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm blocks described in connection with the examples disclosed herein may be implemented as electronic hardware, computer software, or combinations of both. To clearly illustrate this interchangeability of hardware and software, various illustrative components, blocks, modules, circuits, and blocks have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present method and apparatus.

The hardware used to implement the various illustrative logics, logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some blocks or methods may be performed by circuitry that is specific to a given function.

In some exemplary examples, the functions described may be implemented in hardware, software, firmware, or any combination thereof. If implemented in software, the functions may be stored as one or more instructions or code on a non-transitory computer-readable storage medium or non-transitory processor-readable storage medium. The blocks of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

## Claims

1. A method (300) for a wireless communication device having a first Subscriber Identity Module "SIM" associated with a first subscription and a second SIM associated with a second subscription, the method comprising:
sending (B310), by the wireless communication device to a network base station, a message related to periodic tune-away; and
receiving (B320), by the wireless communication device from the network base station, a network response in response to the message,
**characterized in that**:
the message sent is a control element indicating a periodic tune away of the first SIM to the second SIM, the control element including a first value tag, the method further comprising:
determining, by the wireless communication device, whether a feedback control element has been received from the network base station; and
resending the control element indicating the periodic tune away of the first SIM to the second SIM, responsive to determining that the feedback control element has not been received,
wherein determining whether the feedback control element has been received further comprises:
receiving a feedback control element including a second value tag; and
determining a match between the first value tag of the control element and the second value tag of the feedback control element.

2. The method of claim 1, wherein the control element further includes a bit flag indicator.

3. The method of claim 2, wherein the bit flag indicator is configured with a value of zero to indicate the periodic tune away.

4. The method of any of claims 1 to 3, wherein the control element further includes a tune away type.

5. The method of any of claims 1 to 4, wherein the control element further includes information associated with at least one of a tune away start time and periodicity of the periodic tune away.

6. A wireless communication device (200), comprising:
at least one radio frequency "RF" resource (218);
a processor (206) configured to connect to a first Subscriber Identity Module "SIM" (204a) associated with a first subscription and to a second SIM (204b) associated with a second subscription, and configured to:
send, to a network base station, a message related to periodic tune-away; and
receive, from the network base station, a network response in response to the message; and
a memory (214),
**characterized in that**:
the message sent is a control element indicating a periodic tune away of the first SIM to the second SIM, the control element including a first value tag, the processor further configured to:
determine, by the wireless communication device, whether a feedback control element has been received from the network base station; and
resend the control element indicating the periodic tune away of the first SIM to the second SIM, responsive to determining that the feedback control element has not been received,
wherein determining whether the feedback control element has been received further comprises the processor configured to:
receive a feedback control element including a second value tag; and determine match between the first value tag of the control element and the second value tag of the feedback control element.

7. A computer readable medium having instructions encoded thereon which, when executed by one or more processors of the wireless communication device of claim 6, cause the one or more processors to perform a method according to any of claims 1 to 5.

## Patentansprüche

1. Ein Verfahren (300) für ein drahtloses Kommunikationsgerät mit einem ersten SIM (Subscriber Identity Module), das mit einem ersten Vertrag assoziiert ist, und einem zweiten SIM, das mit einem zweiten Vertrag assoziiert ist, wobei das Verfahren aufweist:
Senden (B310), durch das drahtlose Kommunikationsgerät an eine Netzwerkbasisstation, einer Nachricht in Bezug auf ein periodisches Tune-Away, und
Empfangen (B320), durch das drahtlose Kommunikationsgerät und von der Netzwerkbasisstation, einer Netzwerkantwort in Antwort auf die Nachricht,
**dadurch gekennzeichnet, dass**:
die gesendete Nachricht ein Steuerelement ist, das ein periodisches Tune-Away des ersten SIM zu dem zweiten SIM angibt, wobei das Steuerelement ein erstes Wertetikett enthält,
wobei das Verfahren weiterhin aufweist:
Bestimmen, durch das drahtlose Kommunikationsgerät, ob ein Rückmeldungs-Steuerelement von der Netzwerkbasisstation empfangen wurde, und
erneutes Senden des Steuerelements, das das periodische Tune-Away des ersten SIM zu dem zweiten SIM angibt, in Antwort auf das Bestimmen, dass das Rückmeldungs-Steuerelement nicht empfangen wurde,
wobei das Bestimmen, ob das Rückmeldungs-Steuerelement empfangen wurde, weiterhin aufweist:
Empfangen eines Rückmeldungs-Steuerelements, das ein zweites Wertetikett enthält, und
Bestimmen einer Übereinstimmung zwischen dem ersten Wertetikett des Steuerelements und dem zweiten Wertetikett des Rückmeldungs-Steuerelements.

2. Verfahren nach Anspruch 1, wobei das Steuerelement weiterhin einen Bitflag-Indikator enthält.

3. Verfahren nach Anspruch 2, wobei der Bitflag-Indikator mit einem Wert von null konfiguriert ist, um das periodische Tune-Away anzugeben.

4. Verfahren nach einem der Ansprüche 1 bis 3, wobei das Steuerelement weiterhin einen Tune-Away-Typ enthält.

5. Verfahren nach einem der Ansprüche 1 bis 4, wobei das Steuerelement weiterhin Informationen, die mit einer Tune-Away-Startzeit und/oder einer Periodizität des periodischen Tune-Aways assoziiert sind, enthält.

6. Ein drahtloses Kommunikationsgerät (200), aufweisend:
wenigstens eine Hochfrequenz (HF)-Ressource (218),
einen Prozessor (206), der konfiguriert ist zum Verbinden mit einem ersten SIM (Subscriber Identity Module) (204a), das mit einem ersten Vertrag assoziiert ist, und mit einem zweiten SIM (204b), das mit einem zweiten Vertrag assoziiert ist, zum Senden, an eine Netzwerkbasisstation, einer Nachricht in Bezug auf ein periodisches Tune-Away und zum Empfangen, von der Netzwerkbasisstation, einer Netzwerkantwort in Antwort auf die Nachricht, und
einen Speicher (214),
**dadurch gekennzeichnet, dass**:
die gesendete Nachricht ein Steuerelement ist, das ein periodisches Tune-Away des ersten SIM zu dem zweiten SIM angibt, wobei das Steuerelement ein erstes Wertetikett enthält, und
der Prozessor weiterhin konfiguriert ist zum:
Bestimmen, durch das drahtlose Kommunikationsgerät, ob ein Rückmeldungs-Steuerelement von der Netzwerkbasisstation empfangen wurde, und
erneutes Senden des Steuerelements, das das periodische Tune-Away des ersten SIM zu dem zweiten SIM angibt, in Antwort auf das Bestimmen, dass das Rückmeldungs-Steuerelement nicht empfangen wurde,
wobei der Prozessor für das Bestimmen, ob das Rückmeldungs-Steuerelement empfangen wurde, weiterhin konfiguriert ist zum:
Empfangen eines Rückmeldungs-Steuerelements, das ein zweites Wertetikett enthält, und
Bestimmen einer Übereinstimmung zwischen dem ersten Wertetikett des Steuerelements und dem zweiten Wertetikett des Rückmeldungs-Steuerelements.

7. Ein computerlesbares Medium mit darauf codierten Befehlen, die bei einer Ausführung durch einen oder mehrere Prozessoren des drahtlosen Kommunikationsgeräts von Anspruch 6 veranlassen, dass der eine oder die mehreren Prozessoren ein Verfahren gemäß einem der Ansprüche 1 bis 5 durchführen.

## Revendications

1. Un procédé (300) destiné à un dispositif de communication sans fil possédant un premier module d'identification d'abonné "SIM" associé à un premier abonnement et un deuxième SIM associé à un deuxième abonnement, le procédé comprenant :
l'envoi (B310), par le dispositif de communication sans fil à une station de base de réseau, d'un message relatif à une modification de réglage périodique, et
la réception (B320), par le dispositif de communication sans fil à partir de la station de base de réseau, d'une réponse de réseau en réponse au message,
**caractérisé en ce que**
le message envoyé est un élément de commande indiquant une modification de réglage périodique du premier SIM vers le deuxième SIM, l'élément de commande comprenant une première étiquette de valeur, le procédé comprenant en outre :
la détermination, par le dispositif de communication sans fil, si un élément de commande de rétroaction a été reçu à partir de la station de base de réseau, et
le renvoi de l'élément de commande indiquant la modification de réglage périodique du premier SIM au deuxième SIM en réponse à la détermination que l'élément de commande de rétroaction n'a pas été reçu,
où la détermination si l'élément de commande de rétroaction a été reçu comprend en outre :
la réception d'un élément de commande de rétroaction comprenant une deuxième étiquette de valeur, et
la détermination d'un appariement entre la première étiquette de valeur de l'élément de commande et la deuxième étiquette de valeur de l'élément de commande de rétroaction.

2. Le procédé selon la Revendication 1, où l'élément de commande comprend en outre un indicateur de balise binaire.

3. Le procédé selon la Revendication 2, où l'indicateur de balise binaire est configuré avec une valeur nulle de façon à indiquer la modification de réglage périodique.

4. Le procédé selon l'une quelconque des Revendications 1 à 3, où l'élément de commande comprend en outre un type de modification de réglage.

5. Le procédé selon l'une quelconque des Revendications 1 à 4, où l'élément de commande comprend en outre des informations associées à au moins un élément parmi une heure de début de la modification de réglage et une périodicité de la modification de réglage périodique.

6. Un dispositif de communication sans fil (200), comprenant :
au moins une ressource radiofréquence "RF" (218),
un processeur (206) configuré de façon à se connecter à un premier module d'identification d'abonné "SIM" (204a) associé à un premier abonnement et à un deuxième SIM (204b) associé à un deuxième abonnement, et configuré de façon à :
envoyer, à une station de base de réseau, un message relatif à une modification de réglage périodique, et
recevoir, à partir de la station de base de réseau, une réponse de réseau en réponse au message, et
une mémoire (214),
**caractérisé en ce que**
le message envoyé est un élément de commande indiquant une modification de réglage périodique du premier SIM au deuxième SIM, l'élément de commande comprenant une première étiquette de valeur, le processeur étant configuré en outre de façon à :
déterminer, par le dispositif de communication sans fil, si un élément de commande de rétroaction a été reçu à partir de la station de base de réseau, et
renvoyer l'élément de commande indiquant la modification de réglage périodique du premier SIM au deuxième SIM en réponse à la détermination que l'élément de commande de rétroaction n'a pas été reçu,
où la détermination si l'élément de commande de rétroaction a été reçu comprend en outre le processeur configuré de façon à :
recevoir un élément de commande de rétroaction comprenant une deuxième étiquette de valeur, et déterminer un appariement entre la première étiquette de valeur de l'élément de commande et la deuxième étiquette de valeur de l'élément de commande de rétroaction.

7. Un support lisible par ordinateur possédant des instructions codées sur celui-ci qui, lorsqu'elles sont exécutées par un ou plusieurs processeurs du dispositif de communication sans fil selon la Revendication 6, amènent les un ou plusieurs processeurs à exécuter un procédé selon l'une quelconque des Revendications 1 à 5.
